# EUROPÄISCHE PATENTSCHRIFT

(11) **EP 3 491 302 B1**
(45) Veröffentlichungstag und Bekanntmachung des Hinweises auf die Patenterteilung: **21.06.2023**
(21) Anmeldenummer: 17745165.5
(22) Anmeldetag: 24.07.2017
(51) Int. Cl.: F25B 7/00, F25B 9/00, F25B 1/053, F25B 49/02, F25B 25/00

(54) **WÄRMEPUMPENSYSTEM MIT CO2 ALS ERSTEM WÄRMEPUMPENMEDIUM UND WASSER ALS ZWEITEM WÄRMEPUMPENMEDIUM**
HEAT PUMP SYSTEM HAVING CO2 AS FIRST HEAT PUMP MEDIUM AND WATER AS SECOND HEAT PUMP MEDIUM
SYSTÈME DE POMPE À CHALEUR UTILISANT DU CO2 COMME PREMIER FLUIDE DE POMPE À CHALEUR ET DE L'EAU COMME DEUXIÈME FLUIDE DE POMPE À CHALEUR

(30) Priorität: 26.07.2016 DE 102016213680
(43) Veröffentlichungstag der Anmeldung: 05.06.2019
(60) Teilanmeldung: 23172620.9
(73) Patentinhaber: Efficient Energy GmbH, 85622 Feldkirchen (DE)
(72) Erfinder: KNIFFLER, Oliver, 82054 Sauerlach (DE); SÜSS, Jürgen, 88131 Bodolz (DE)
(74) Vertreter: Zinkler, Franz
(86) Internationale Anmeldenummer: PCT/EP2017/068662
(87) Internationale Veröffentlichungsnummer: WO 2018/019777

(56) Entgegenhaltungen:
- EP-A1- 2 631 562
- EP-A1- 2 995 885
- WO-A1-2007/118482

## Beschreibung

Die vorliegende Erfindung bezieht sich auf Wärmepumpen zum Kühlen oder für eine sonstige Anwendung einer Wärmepumpe.

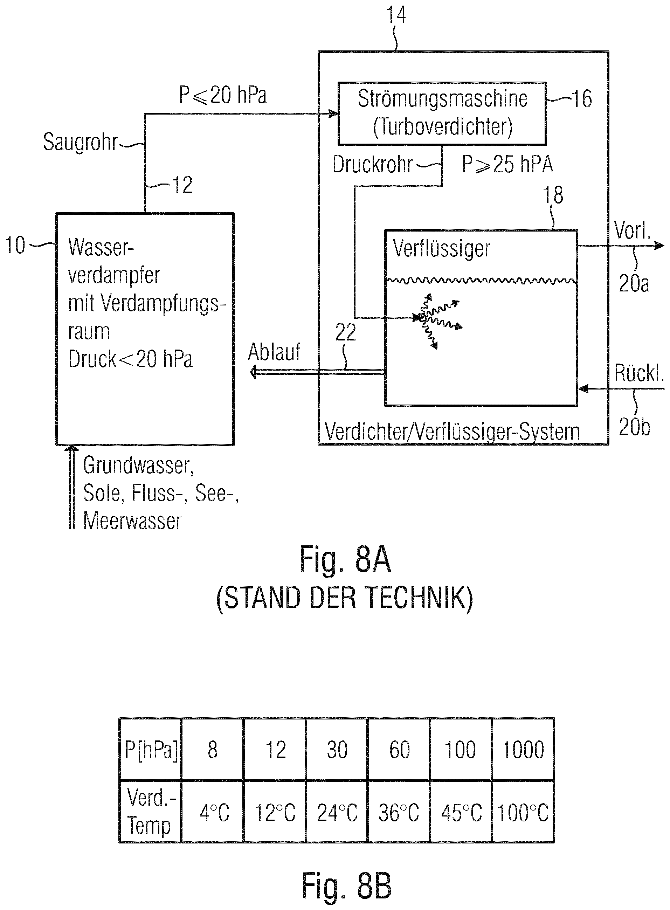

Fig. 8A und Fig. 8B stellen eine Wärmepumpe dar, wie sie in dem europäischen Patent EP 2016349 B1 beschrieben ist. Fig. 8A zeigt eine Wärmepumpe, die zunächst einen Wasserverdampfer 10 zum Verdampfen von Wasser als Kältemittel bzw. Kältemedium aufweist, um ausgangsseitig einen Dampf in einer Arbeitsdampfleitung 12 zu erzeugen. Der Verdampfer umfasst einen Verdampfungsraum (in Fig. 8A nicht gezeigt) und ist ausgebildet, um in dem Verdampfungsraum einen Verdampfungsdruck kleiner als 20 hPa zu erzeugen, so dass das Wasser bei Temperaturen unter 15 °C im Verdampfungsraum verdampft. Das Wasser ist vorzugsweise Grundwasser, im Erdreich frei oder in Kollektorrohren zirkulierende Sole, also Wasser mit einem bestimmten Salzgehalt, Flusswasser, Seewasser oder Meerwasser. So sind alle Arten von Wasser, also kalkhaltiges Wasser, kalkfreies Wasser, salzhaltiges Wasser oder salzfreies Wasser verwendbar. Dies liegt daran, dass alle Arten von Wasser, also alle diese "Wasserstoffe", die günstige Wasser-Eigenschaft haben, dass Wasser, das auch als "R 718" bekannt ist, eine für den Wärmepumpen-Prozess nutzbares Enthalpie-Differenz-Verhältnis von 6 hat, was dem mehr als 2-fachen des typischen nutzbaren Enthalpie-Differenz-Verhältnisses von z. B. R 134a entspricht.

Der Wasserdampf wird durch die Saugleitung 12 einem Verdichter/Verflüssiger-System 14 zugeführt, das eine Strömungsmaschine wie z. B. einen Radialverdichter, beispielsweise in Form eines Turboverdichters aufweist, der in Fig. 8A mit 16 bezeichnet ist. Die Strömungsmaschine ist ausgebildet, um den Arbeitsdampf auf einen Dampfdruck zumindest größer als 25 hPa zu verdichten. 25 hPa korrespondiert mit einer Verflüssigungstemperatur von etwa 22 °C, was zumindest an relativ warmen Tagen bereits eine ausreichende Heizungs-Vorlauftemperatur einer Fußbodenheizung sein kann. Um höhere Vorlauftemperaturen zu generieren, können Drücke größer als 30 hPa mit der Strömungsmaschine 16 erzeugt werden, wobei ein Druck von 30 hPa eine Verflüssigungstemperatur von 24 °C hat, ein Druck von 60 hPa eine Verflüssigungstemperatur von 36 °C hat, und ein Druck von 100 hPa einer Verflüssigungstemperatur von 45 °C entspricht. Fußbodenheizungen sind ausgelegt, um mit einer Vorlauftemperatur von 45 °C auch an sehr kalten Tagen ausreichend heizen zu können.

Die Strömungsmaschine ist mit einem Verflüssiger 18 gekoppelt, der ausgebildet ist, um den verdichteten Arbeitsdampf zu verflüssigen. Durch das Verflüssigen wird die in dem Arbeitsdampf enthaltene Energie dem Verflüssiger 18 zugeführt, um dann über den Vorlauf 20a einem Heizsystem zugeführt zu werden. Über den Rücklauf 20b fließt das Arbeitsfluid wieder in den Verflüssiger zurück.

Es ist möglich, dem energiereichen Wasserdampf direkt durch das kältere Heizungswasser die Wärme (-energie) zu entziehen, welche vom Heizungswasser aufgenommen wird, so dass dieses sich erwärmt. Dem Dampf wird hierbei so viel Energie entzogen, dass dieser verflüssigt wird und ebenfalls am Heizungskreislauf teilnimmt.

Damit findet ein Materialeintrag in den Verflüssiger bzw. das Heizungssystem statt, der durch einen Ablauf 22 reguliert wird, derart, dass der Verflüssiger in seinem Verflüssigerraum einen Wasserstand hat, der trotz des ständigen Zuführens von Wasserdampf und damit Kondensat immer unterhalb eines Maximalpegels bleibt.

Wie es bereits ausgeführt worden ist, kann ein offener Kreislauf genommen werden. Es kann also das Wasser, das die Wärmequelle darstellt, direkt ohne Wärmetauscher verdampft werden. Alternativ könnte jedoch auch das zu verdampfende Wasser zunächst über einen Wärmetauscher von einer externen Wärmequelle aufgeheizt werden. Dabei ist jedoch zu bedenken, dass dieser Wärmetauscher wieder Verluste und apparativen Aufwand bedeutet.

Um auch Verluste für den zweiten Wärmetauscher, der auf Verflüssiger-Seite bisher notwendigerweise vorhanden ist, zu vermeiden, kann auch dort das Medium direkt verwendet werden. Wenn an ein Haus mit Fußbodenheizung gedacht wird, kann das Wasser, das von dem Verdampfer stammt, direkt in der Fußbodenheizung zirkulieren.

Alternativ kann jedoch auch auf Verflüssiger-Seite ein Wärmetauscher angeordnet werden, der mit dem Vorlauf 20a gespeist wird und der den Rücklauf 20b aufweist, wobei dieser Wärmetauscher das im Verflüssiger befindliche Wasser abkühlt und damit eine separate Fußbodenheizungsflüssigkeit, die typischerweise Wasser sein wird, aufheizt.

Aufgrund der Tatsache, dass als Arbeitsmedium Wasser verwendet wird, und aufgrund der Tatsache, dass von dem Grundwasser nur der verdampfte Anteil in die Strömungsmaschine eingespeist wird, spielt der Reinheitsgrad des Wassers keine Rolle. Die Strömungsmaschine wird, genauso wie der Verflüssiger und die ggf. direkt gekoppelte Fußbodenheizung immer mit destilliertem Wasser versorgt, derart, dass das System im Vergleich zu heutigen Systemen einen reduzierten Wartungsaufwand hat. Anders ausgedrückt ist das System selbstreinigend, da dem System immer nur destilliertes Wasser zugeführt wird und das Wasser im Ablauf 22 somit nicht verschmutzt ist.

Darüber hinaus sei darauf hingewiesen, dass Strömungsmaschinen die Eigenschaften haben, dass sie - ähnlich einer Flugzeugturbine - das verdichtete Medium nicht mit problematischen Stoffen, wie beispielsweise Öl, in Verbindung bringen. Stattdessen wird der Wasserdampf lediglich durch die Turbine bzw. den Turboverdichter verdichtet, jedoch nicht mit Öl oder einem sonstigen die Reinheit beeinträchtigenden Medium in Verbindung gebracht und damit verunreinigt.

Das durch den Ablauf abgeführte destillierte Wasser kann somit - wenn keine sonstigen Vorschriften im Wege stehen - ohne weiteres dem Grundwasser wieder zugeführt werden. Alternativ kann es hier jedoch auch z. B. im Garten oder in einer Freifläche versickert werden, oder es kann über den Kanal, sofern dies Vorschriften gebieten - einer Kläranlage zugeführt werden.

Die Kombination von Wasser als Arbeitsmittel mit dem um das 2-fache besseren nutzbaren Enthalpie-Differenz-Verhältnis im Vergleich zu R 134a und aufgrund der damit reduzierten Anforderungen an die Geschlossenheit des Systems (es wird vielmehr ein offenes System bevorzugt), und aufgrund des Einsatzes der Strömungsmaschine, durch die effizient und ohne Reinheitsbeeinträchtigungen die erforderlichen Verdichtungsfaktoren erreicht werden, wird ein effizienter und umweltneutraler Wärmepumpenprozess geschaffen, der dann, wenn im Verflüssiger der Wasserdampf direkt verflüssigt wird, noch effizienter wird, da dann im gesamten Wärmepumpenprozess kein einziger Wärmetauscher mehr benötigt wird.

Fig. 8B zeigt eine Tabelle zur Illustration verschiedener Drücke und der diesen Drücken zugeordneten Verdampfungstemperaturen, woraus sich ergibt, dass insbesondere für Wasser als Arbeitsmedium recht niedrige Drücke im Verdampfer zu wählen sind.

Um eine Wärmepumpe mit einem hohen Wirkungsgrad zu erreichen, ist es wichtig, dass alle Komponenten günstig ausgelegt sind, also der Verdampfer, der Verflüssiger und der Verdichter.

Die EP 2016349 B1 zeigt ferner, dass ein Verflüssiger-Ablauf zum Beschleunigen des Verdampfungsvorgangs eingesetzt wird, so dass die Wand eines Ablauf-Rohrs als Keim für eine Blasensiedung wirkt. Ferner kann der Ablauf auch selbst dazu verwendet werden, die Blasenbildung zu verstärken. Hierzu wird der Verflüssiger-Ablauf mit einem Düsenrohr verbunden, das an einem Ende einen Abschluss hat, und das Düsenöffnungen aufweist. Das warme Verflüssiger-Wasser, das aus dem Verflüssiger über den Ablauf mit einer Rate von beispielsweise 4 ml pro Sekunde zugeführt wird, wird nunmehr in den Verdampfer eingespeist. Es wird auf seinem Weg zu einer Düsenöffnung in dem Düsenrohr oder unmittelbar am Austritt an einer Düse aufgrund des für die Temperatur des Ablaufwassers zu geringen Drucks bereits unter der Wasseroberfläche des Verdampfer-Wassers verdampfen. Die dort entstehenden Dampfblasen werden unmittelbar als Siede-Keime für das Verdampfer-Wasser, das über den Zulauf gefördert wird, wirken. Damit kann ohne größere zusätzliche Maßnahmen eine effiziente Blasensiedung im Verdampfer getriggert werden.

Die DE 4431887 A1 offenbart eine Wärmepumpenanlage mit einem leichtgewichtigen, großvolumigen Hochleistungs-Zentrifugalkompressor. Ein Dampf, der einen Kompressor einer zweiten Stufe verlässt, besitzt eine Sättigungstemperatur, die die Umgebungstemperatur oder diejenige eines verfügbaren Kühlwassers übersteigt, wodurch eine Wärmeabfuhr ermöglicht wird. Der komprimierte Dampf wird von dem Kompressor der zweiten Stufe in die Verflüssigereinheit überführt, die aus einer Schüttschicht besteht, die innerhalb einer Kühlwassersprüheinrichtung an einer Oberseite, die durch eine Wasserzirkulationspumpe versorgt wird, vorgesehen ist. Der komprimierte Wasserdampf steigt in dem Kondensor durch die Schüttschicht an, wo sie in direktem Gegenstromkontakt mit dem nach unten strömenden Kühlwasser gelangt. Der Dampf kondensiert und die latente Wärme der Kondensation, die durch das Kühlwasser absorbiert wird, wird an die Atmosphäre über das Kondensat und das Kühlwasser ausgestoßen, die zusammen aus dem System entfernt werden. Der Verflüssiger wird kontinuierlich mit nicht kondensierbaren Gasen mittels einer Vakuumpumpe über eine Rohrleitung gespült.

Die WO 2014072239 A1 offenbart einen Verflüssiger mit einer Kondensationszone zum Kondensieren von zu kondensierendem Dampf in einer Arbeitsflüssigkeit. Die Kondensationszone ist als Volumenzone ausgebildet und hat eine seitliche Begrenzung zwischen dem oberen Ende der Kondensationszone und dem unteren Ende. Ferner umfasst der Verflüssiger eine Dampfeinleitungszone, die sich entlang des seitlichen Endes der Kondensationszone erstreckt und ausgebildet ist, um zu kondensierenden Dampf seitlich über die seitliche Begrenzung in die Kondensationszone zuzuführen. Damit wird, ohne das Volumen des Verflüssigers zu vergrößern die tatsächliche Kondensation zu einer Volumenkondensation gemacht, weil der zu verflüssigende Dampf nicht nur frontal von einer Seite in ein Kondensationsvolumen bzw. in die Kondensationszone eingeleitet wird, sondern seitlich und vorzugsweise von allen Seiten. Damit wird nicht nur sichergestellt, dass das zur Verfügung gestellte Kondensationsvolumen bei gleichen äußeren Abmessungen im Vergleich zu einer direkten Gegenstromkondensation vergrößert wird, sondern dass gleichzeitig auch die Effizienz des Verflüssigers verbessert wird, weil der zu verflüssigende Dampf in der Kondensationszone eine Stromrichtung quer zu der Strömungsrichtung der Kondensationsflüssigkeit aufweist. Die EP 2 995 885 A1 offenbart ein Wärmepumpensystem, mit folgenden Merkmalen: einer ersten Wärmepumpenanordnung, die ausgebildet ist, um mit einem ersten Wärmepumpenmedium zu arbeiten, das C02 aufweist; einer zweiten Wärmepumpenanordnung, die ausgebildet ist, um mit einem zweiten Wärmepumpenmedium zu arbeiten, das Wasser aufweist.

Gewerbliche Kälteanlagen, wie sie z.B. in Supermärkten zur Frischhaltung und Tiefkühlung von Verkaufswaren und Lebensmitteln Verwendung finden, nutzen in den kälteren Regionen mittlerweile in der Regel CO2 als Kältemittel. CO2 ist ein natürliches Kältemittel und ist mit vertretbarem technischem Aufwand unterkritisch, d.h. bei einer Verflüssigung des Kältemittels unterhalb des Kritischen Punktes in Zweiphasengebiet, als bei Kondensationstemperaturen unter 30°C gut einsetzbar und auch energetisch vorteilhaft gegenüber den bislang eingesetzten F-Gasanlagen, die mit fluorierten Kohlenwasserstoffen arbeiten. In Mitteleuropa ist CO2 nicht ganzjährig unterkritisch einsetzbar, da hohe Au-ßentemperaturen im Sommer sowie auftretende Wärmeübertragungsverluste dann keinen unterkritischen Betrieb zulassen. Um bei einer derartigen CO2-Kälteanlage eine ausreichende energetische Prozessgüte im unterkritischen Betrieb sicherzustellen, wird ein erheblicher technischer Aufwand betrieben. Beim überkritischen Betrieb erfolgt die Wärmeabgabe des Prozesses bei einem Druck, der oberhalb des Kritischen Punktes liegt. Daher spricht man auch von einer Gaskühlung, da eine Verflüssigung des Kältemittels nicht mehr möglich ist. Die Gaskühlerdrücke steigen bei überkritischen Betrieb auf mehr als 100 bar an und der Hochdruckteil der CO2-Kälteanlage inklusive ihrer Wärmeübertrager muss für diese hohen Drücke dimensioniert werden. Weiterhin müssen größere und leistungsfähigere Verdichter oder mehrere Verdichter parallel und oder in Serie geschaltet werden. Schließlich kommen zusätzliche Komponenten wie Sammler und Ejektoren zum Einsatz, die sich teilweise noch in der Konzeptentwicklungsphase befinden und die Effizienz der Anlage bei überkritischem Betrieb steigern sollen.

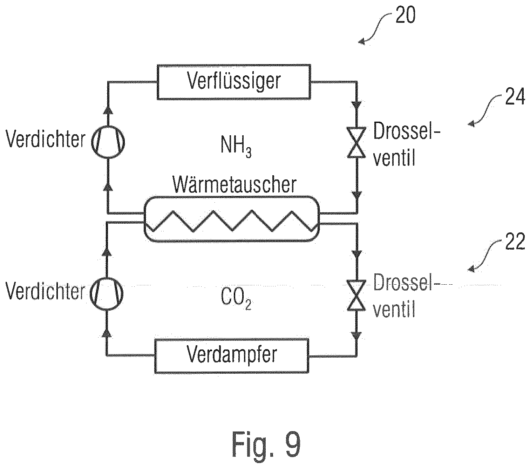

Fig. 9 zeigt eine CO2-Kaskadenanlage 20. Bei solchen Kaskadenanlagen mit dem Kältemittel CO2 wird für die untere Temperaturstufe 22 CO2 als Kältemittel verwendet und für eine obere Temperaturstufe 24 Kältemittel, die ein hohes Treibhauspotential haben, wie z.B. NH3, F-Gase oder Kohlenwasserstoffe. Die gesamte Rückkühlwärme des CO2 Prozesses wird hier vom Verdampfer des Prozesses der oberen Temperaturstufe 24 aufgenommen.

Durch den Prozess der oberen Temperaturstufe 24 wird dann das Temperaturniveau so weit erhöht, dass die Wärmeabgabe durch den Verflüssiger an die Umgebung erfolgen kann. Ein alleiniger Betrieb der CO2-Anlage ist bei dieser Verschaltung nicht möglich und der Kältekreis der oberen Temperaturstufe 24 ist komponentenbedingt nicht in der Lage, beliebig kleine Temperaturanhebungen zu realisieren.

Weiterhin nachteilig an dem in Fig. 9 beschriebenen Konzept ist die Tatsache, dass die Arbeitsmedien für die zweite Wärmepumpenstufe hohes Treibhauspotenzial haben.

Weiterhin problematisch ist die Tatsache, dass durch die Kaskadenschaltung der beiden Wärmepumpenanordnungen in Fig. 9 die komplette Kühlleistung des CO2-Kreislaufes vom NH3-Kreislauf weitertransportiert wird. Dadurch ist es nötig, dass die komplette Leistung, die durch die erste Wärmepumpenanordnung mit CO2 als Arbeitsmedium geleistet wird, noch einmal durch die zweite Wärmepumpenanordnung mit NH3 als Arbeitsmedium aufgewendet werden muss.

Daher wird, wie es bereits dargelegt worden ist, oft trotz der Probleme mit kritischen Temperaturen auf einen Einsatz einer einstufigen CO2-Anlage gesetzt. Diese arbeitet bei sehr hohen Drücken von über 60 Bar. Wenn eine Kühlanlage beispielsweise in einem Supermarkt betrachtet wird, so bedeutet dies, dass die Wärmeabfuhr, d. h. die Kälteerzeugung, im Verdampfer stattfindet, der beispielsweise in einem Technikraum zusammen mit dem Verdichter platziert ist. Das verdichtete CO2-Arbeitsgas wird dann jedoch durch den kompletten Supermarkt hindurch in Hochdruckleitungen auf einen Rückkühler geleitet, der ebenfalls Hochdruck-fest sein muss. Dort wird Energie aus dem verdichteten CO2-Gas an die Umgebung abgegeben, so dass eine Verflüssigung stattfindet. Das verflüssigte CO2-Gas, das nach wie vor unter einem hohen Druck steht, wird dann typischerweise wieder über Hochdruckleitungen vom Rückkühler zurück in den Technikraum geführt, wo eine Relaxation über eine Drossel stattfindet, und das relaxierte CO2-Arbeitsmedium in den ebenfalls unter beachtlichem Druck stehenden Verdampfer rückgeführt wird, wo dann wieder eine Verdampfung stattfindet, um einen CO2-Rücklauf vom Kühlsystem des Supermarkts erneut abzukühlen.

Die Kältetechnik ist daher relativ aufwendig, und zwar nicht nur im Hinblick auf die Wärmepumpenanlage im Technikraum, sondern auch aufgrund der Leitungstechnik durch den Supermarkt hindurch und aufgrund des Rückkühlers, der für sehr hohe Drücke ausgebildet sein muss. Andererseits ist diese Installation dahin gehend vorteilhaft, dass CO2 nur eine im Vergleich zu anderen Medien geringe Klimawirksamkeit aufweist und gleichzeitig, zumindest in überschaubaren Mengen, für Menschen ungiftig ist.

Die Aufgabe der vorliegenden Erfindung besteht darin, ein verbessertes Wärmepumpensystem zu schaffen.

Diese Aufgabe wird durch ein Wärmepumpensystem nach Patentanspruch 1 oder ein Verfahren zum Herstellen eines Wärmepumpensystems nach Patentanspruch 14 oder durch ein Verfahren zum Betreiben eines Wärmepumpensystems nach Anspruch 15 gelöst.

Erfindungsgemäß wird wenigstens einer der vorgenannten Nachteile des Stands der Technik ausgeräumt. Bei einem ersten Aspekt wird eine CO2-Wärmepumpenanordnung mit einer Wärmepumpenanordnung, die Wasser als Arbeitsmedium aufweist, gekoppelt. Diese Kopplung findet über einen Koppler zum thermischen Koppeln der beiden Wärmepumpenanlagen statt. Die Verwendung von Wasser als Arbeitsmedium hat mehrere Vorteile. Ein Vorteil besteht darin, dass Wasser keine hohen Drücke benötigt, um in einem Wärmepumpenkreislauf zu arbeiten, der für die vorgenannten Temperaturen ausgebildet ist. Stattdessen finden relativ geringe Drücke statt, welche jedoch je nach Implementierung nur innerhalb der Wärmepumpenanordnung, die mit Wasser als Arbeitsmedium läuft, herrschen müssen, während ohne Weiteres ein separater Kreislauf zum Rückkühler eines Kühlsystems eingesetzt werden kann, der auf anderen Drücken und mit anderen Arbeitsmedien als CO2 oder Wasser arbeiten kann.

Ein weiterer Vorteil besteht darin, dass mit einer Wärmepumpenanordnung, die Wasser als Arbeitsmedium verwendet, mit einem begrenzten Energieaufwand immer sichergestellt werden kann, dass die CO2-Wärmepumpenanordnung unterhalb des kritischen Punkts arbeitet. Die dafür nötigen Temperaturen unter 30 °C bzw. sogar unter 25 °C können ohne Weiteres durch die zweite Wärmepumpenanordnung bereitgestellt werden, die mit Wasser arbeitet. Typischerweise treten bei CO2-Wärmepumpen nach dem Verdichter Temperaturen von vielleicht 70 °C auf. Die Herabkühlung von 70 °C auf z. B. 25 oder 22 °C ist ein Temperaturbereich, der sehr effizient mit einer Wärmepumpe, die mit Wasser als Arbeitsmedium arbeitet, bewerkstelligt werden kann.

Gemäß einem alternativen oder zusätzlichen Aspekt findet die Ankopplung der zweiten Wärmepumpenanordnung an die erste Wärmepumpenanordnung durch den Koppler zum thermischen Koppeln der beiden Wärmepumpenanordnungen statt. Hier umfasst der Koppler einen ersten Wärmetauscher und einen zweiten Wärmetauscher. Der erste Wärmetauscher ist mit dem Eingangsabschnitt der zweiten Wärmepumpenanordnung verbunden, und der zweite Wärmetauscher ist mit dem Ausgangsabschnitt der zweiten Wärmepumpenanordnung verbunden.

Unabhängig davon, ob in der ersten Wärmepumpenanordnung CO2 als Arbeitsmedium verwendet wird, und unabhängig davon, ob in der zweiten Wärmepumpenanordnung Wasser als Arbeitsmedium verwendet wird, führt diese doppelte Ankopplung zu einer erheblich effizienteren Wärmeübertragung von der ersten Wärmepumpenanordnung zu einer Umgebung, wobei diese Wärmeübertragung beispielsweise über einen weiteren Kreislauf mit Rückkühler bewerkstelligt wird. Es wird bereits eine Temperaturniveauabsenkung des verdichteten Arbeitsdampfes der ersten Wärmepumpenanordnung in dem ausgangsseitigen Kreislauf der zweiten Wärmepumpenanordnung erreicht. Dieses zunächst abgekühlte Medium wird dann in den eingangsseitigen Kreis der zweiten Wärmepumpenanordnung eingespeist und dort auf die Zieltemperatur endgültig abgekühlt. Diese zweistufige Kopplung führt dazu, dass gewissermaßen eine Selbstregelung stattfindet. Dadurch, dass der thermische Koppler zunächst den ersten Wärmetauscher aufweist, der mit dem Ausgangskreis der zweiten Wärmepumpenanordnung verbunden ist, findet eine Abkühlung des verdichteten Arbeitsmediums der ersten Wärmepumpenanordnung um eine bestimmte Menge statt, für die durch die zweite Wärmepumpenanordnung noch im Wesentlichen keine Energie aufgewendet werden muss. Lediglich für den Rest der Wärmeenergie, die durch den ersten Wärmetauscher noch nicht abgeführt wird, muss die zweite Wärmepumpenanordnung Energie aufwenden, um über den eingangsseitigen Wärmetauscher der zweiten Wärmepumpenanordnung dann das Arbeitsmedium der ersten Wärmepumpenanordnung auf die Zieltemperatur zu bringen.

Bei Implementierungen ist der Wärmetauscher, der mit dem Ausgangsabschnitt der zweiten Wärmepumpenanordnung verbunden ist, zusätzlich mit einem Rückkühler, vorzugsweise über einen dritten Arbeitsmediumkreislauf gekoppelt. Damit kann für den Rückkühlerkreislauf ein günstiger Arbeitsdruck gewählt werden, nämlich z. B. ein relativ niedriger Druck zwischen 1 und 5 bar, und das Medium in diesem Kreislauf kann an die speziellen Bedürfnisse angepasst werden, kann also z. B. ein Wasser/Glykol-Gemisch haben, um auch im Winter nicht einzufrieren. Gleichzeitig finden sämtliche gesundheitlich oder konstruktiv kritischen Prozesse innerhalb des Technikraums beispielsweise eines Supermarkts statt, ohne dass Hochdruckleitungen im Supermarkt selbst verlegt werden müssen. Darüber hinaus sind auch sämtliche potenziell gefährlichen Stoffe lediglich im Technikraum enthalten, wenn für die erste Wärmepumpenanordnung und für die zweite Wärmepumpenanordnung oder für eine von beiden Wärmepumpenanordnungen problematische Stoffe verwendet werden. Diese gelangen nicht aus dem Technikraum heraus in einen Flüssigkeitskreislauf, der z. B. durch den Supermarkt zum Rückkühler verläuft und von dort wieder zurückverläuft.

Bei speziellen Implementierungen wird für die zweite Wärmepumpenanordnung eine Wärmepumpenanordnung mit einem Turboverdichter eingesetzt, der beispielsweise mit einem Radialrad betrieben wird. Durch relativ stufenlose Einstellung der Drehzahl des Radialrads kann eine Kühlleistung der zweiten Wärmepumpenanordnung eingestellt werden, die sich automatisch genau an die tatsächlichen Bedürfnisse anpasst. Eine solche Vorgehensweise ist mit einem üblichen Kolbenverdichter, wie er z. B. in der ersten Wärmepumpenanordnung eingesetzt werden kann, wenn CO2 als Arbeitsmedium verwendet wird, oder wenn irgendein anderes Medium als Arbeitsmedium verwendet wird, nicht ohne Weiteres erreichbar. Dagegen erlaubt eine Wärmepumpenanordnung, die gewissermaßen stufenlos einstellbar ist, wie beispielsweise eine Wärmepumpenanordnung mit Turbokompressor, der vorzugsweise ein Radialrad aufweist, eine optimale und besonders effiziente Anpassung an den tatsächlich benötigen Kältebedarf. Wenn beispielsweise die Umgebungstemperatur, mit der der Rückkühler gekoppelt ist, derart niedrig ist, dass bereits die erste Wärmepumpenanlage ausreichend ist und im Falle von CO2 im unterkritischen Bereich betrieben wird, so wird die zweite Wärmepumpenanordnung bei einem Ausführungsbeispiel keine Kälteleistung erzeugen müssen und daher auch keine elektrische Leistung konsumieren. Sind dagegen die Außentemperaturen, in denen der Rücckühler angeordnet ist, in einem Zwischenbereich, so wird eine durch die Ankopplung bedingte automatische Verlagerung der prozentual nötigen Wärmeleistung vom zweiten Wärmetauscher auf den ersten Wärmetauscher, also auf die Eingangsseite der zweiten Wärmepumpenanordnung stattfinden. Je nach Ausführung der zweiten Wärmepumpenanordnung, die als mehrstufige Wärmepumpenanordnung mit oder ohne Freikühlungsmodus betrieben werden kann, findet dann immer eine optimale Anpassung statt, dahin gehend, dass die zweite Wärmepumpenanordnung immer nur so viel Energie konsumiert, wie es tatsächlich nötig ist, um die erste Wärmepumpenanordnung zu unterstützen und, am Beispiel von CO2, im unterkritischen Bereich zu fahren.

Die Verschaltung auf Eingangsseite und Ausgangsseite ist jedoch nicht nur für die Kombination von CO2 als Arbeitsmedium einerseits und Wasser als Arbeitsmedium andererseits von Nutzen, sondern auch für beliebige andere Anwendungen, bei denen andere Arbeitsmedien eingesetzt werden, die in den geforderten Temperaturbereichen überkritisch werden können. Darüber hinaus ist die spezielle Kopplung einer sich selbst anpassenden zweiten Wärmepumpenanordnung mit einer ersten Wärmepumpenanordnung dann von besonderem Vorteil, wenn die erste Wärmepumpenanordnung so konzipiert und ausgebildet ist, dass sie nicht oder nur grob steuerbar ist, also am besten und am effizientesten arbeitet, wenn sie immer gleich viel Wärmeleistung erzeugt. In einer Anwendung, in der diese Wärmepumpenanordnung eigentlich variable Wärmeleistung erzeugen sollte, findet eine optimale Kopplung mit der zweiten Wärmepumpenanordnung eingangsseitig und ausgangsseitig statt, so dass die zweite Wärmepumpenanordnung, die feiner als die erste Wärmepumpenanordnung regelbar bzw. steuerbar ist und vorzugsweise stufenlos regelbar bzw. steuerbar ist, immer nur die Last aufwenden muss, die tatsächlich nötig ist. Die Grundlast bzw. konstante Last oder nur grob einstellbare Last wird damit von der ersten Wärmepumpenanordnung geliefert und der darüber hinaus gehende variable Teil wird variabel gesteuert von der zweiten Wärmepumpenanordnung geliefert, unabhängig davon, ob die erste Wärmepumpenanordnung oder die zweite Wärmepumpenanordnung mit CO2 oder Wasser als Arbeitsmedium laufen.

Darüber hinaus sei darauf hingewiesen, dass bei einem besonders bevorzugten Ausführungsbeispiel die erste Wärmepumpenanordnung mit CO2 betrieben wird, die zweite Wärmepumpenanordnung mit Wasser als Arbeitsmedium betrieben wird, und die Kopplung der beiden Wärmepumpenanordnungen über den ersten und den zweiten Wärmetauscher stattfindet, also eingangsseitig und ausgangsseitig.

Bevorzugte Ausführungsbeispiele der vorliegenden Erfindung werden nachfolgende Bezug nehmend auf die beiliegenden Zeichnungen detailliert erläutert. Es zeigen:
- Fig. 1A: ein Blockschaltbild eines Wärmepumpensystems mit einer ersten Wärmepumpenanordnung mit CO2 und einer zweiten Wärmepumpenanordnung mit Wasser als Arbeitsmedium gemäß einem ersten Aspekt;
- Fig. 1B: ein Wärmepumpensystem gemäß einem alternativen oder zusätzlichen zweiten Aspekt, bei dem die erste Wärmepumpenanordnung und die zweite Wärmepumpenanordnung über einen Koppler gekoppelt sind, der einen ersten Wärmetauscher und einen zweiten Wärmetauscher aufweist;
- Fig. 2A: eine detaillierte Darstellung einer ersten Wärmepumpenanordnung;
- Fig. 2B: eine detaillierte Darstellung einer zweiten Wärmepumpenanordnung;
- Fig. 2C: ein Blockdiagramm eines Ausführungsbeispiels mit CO2 als erstem Arbeitsmedium und Wasser als zweitem Arbeitsmedium und einer eingangsseitigen und ausgangsseitigen Verschaltung;
- Fig. 2D: eine detaillierte Darstellung des Kopplers zum thermischen Koppeln in Verbindung mit einem verflüssigerseitigen Wärmetauscher für einen Rückkühlerkreislauf;
- Fig. 3A: eine schematische Darstellung einer Wärmepumpenanlage mit in Kette geschalteter erster und weiterer Wärmepumpenstufe;
- Fig. 3B: eine schematische Darstellung von zwei fest in Kette geschalteten Wärmepumpenstufen;
- Fig. 4A: eine schematische Darstellung von mit steuerbaren Wegeschaltern gekoppelten in Kette geschalteten Wärmepumpenstufen.
- Fig. 4B: eine schematische Darstellung eines steuerbaren Wegemoduls mit drei Eingängen und drei Ausgängen;
- Fig. 4C: eine Tabelle zur Darstellung der verschiedenen Verbindungen des steuerbaren Wegemoduls für verschiedene Betriebsmodi;
- Fig. 5: eine schematische Darstellung der Wärmepumpenanlage von Fig. 4A mit zusätzlichem selbstregelndem Flüssigkeitsausgleich zwischen den Wärmepumpenstufen;
- Fig. 6A: eine schematische Darstellung der Wärmepumpenanlage mit zwei Stufen, die im Hochleistungsmodus (HLM) betrieben wird;
- Fig. 6B: eine schematische Darstellung der Wärmepumpenanlage mit zwei Stufen, die im Mittelleistungsmodus (MKM) betrieben wird;
- Fig. 6C: eine schematische Darstellung der Wärmepumpenanlage mit zwei Stufen, die im Freikühlungsmodus (FKM) betrieben wird;
- Fig. 6D: eine schematische Darstellung der Wärmepumpenanlage mit zwei Stufen, die im Niederleistungsmodus (NLM) betrieben wird;
- Fig. 7A: eine Tabelle zur Darstellung der Betriebszustände diverser Komponenten in den verschiedenen Betriebsmodi;
- Fig. 7B: eine Tabelle zur Darstellung der Betriebszustände der beiden gekoppelten steuerbaren 2x2-Wegeschalter;
- Fig. 7C: eine Tabelle zur Darstellung der Temperaturbereiche, für die die Betriebsmodi geeignet sind;
- Fig. 7D: eine schematische Darstellung der Grob/Fein-Steuerung über die Betriebsmodi einerseits und die Drehzahlsteuerung andererseits;
- Fig. 8A: eine schematische Darstellung einer bekannten Wärmepumpenanlage mit Wasser als Arbeitsmittel;
- Fig. 8B: eine Tabelle zur Darstellung verschiedener Druck/Temperatursituationen für Wasser als Arbeitsflüssigkeit; und
- Fig. 9: eine kaskadierte Kälteanlage mit CO2-Wärmepumpenanordnung und NH3-Wärmepumpenanordnung.

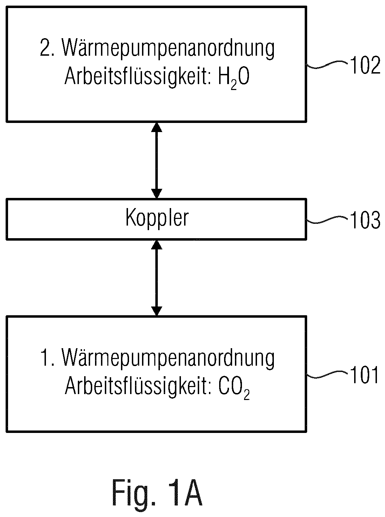

Fig. 1A zeigt ein Wärmepumpensystem gemäß einem ersten Aspekt der vorliegenden Erfindung, das eine erste Wärmepumpenanordnung 101 aufweist, die ausgebildet ist, um mit einem ersten Wärmepumpenmedium zu arbeiten, das CO2 aufweist. Ferner umfasst das Wärmepumpensystem eine zweite Wärmepumpenanordnung, die ausgebildet ist, um mit einem zweiten Wärmepumpenmedium zu arbeiten, das Wasser (H2O) aufweist. Die zweite Wärmepumpenanordnung ist mit 102 bezeichnet. Die erste Wärmepumpenanordnung 101 und die zweite Wärmepumpenanordnung 102 sind über einen Koppler 103 zum thermischen Koppeln der ersten Wärmepumpenanordnung 101 und der zweiten Wärmepumpenanordnung 102 gekoppelt.

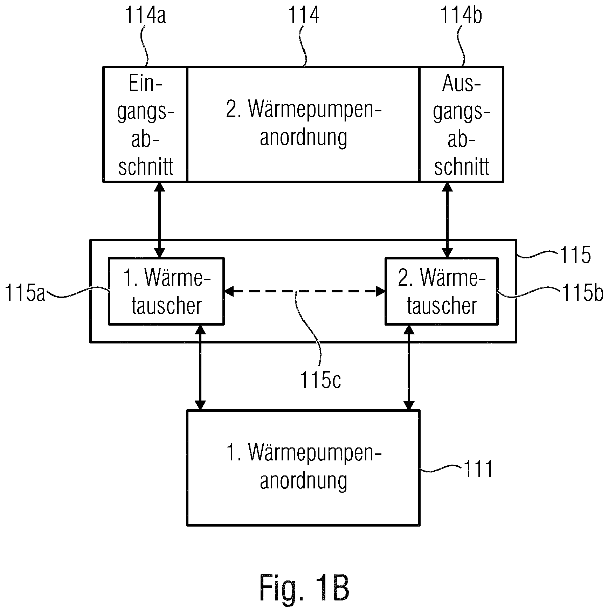

Der Koppler kann beliebig ausgestaltet sein, nämlich beispielsweise so, wie der Wärmetauscher von Fig. 9, dahin gehend, dass der Verflüssiger der ersten Wärmepumpenanordnung 101 mit dem Verdampfer der zweiten Wärmepumpenanordnung 102 über einen Wärmetauscher gekoppelt ist. Alternativ kann je nach Implementierung auch eine andere Art und Weise der Kopplung stattfinden, z.B. eine ausgangsseitige Kopplung, dahin gehend, dass ein Verdichterausgang der ersten Wärmepumpenanordnung mit einem Verflüssigerausgang der zweiten Wärmepumpenanordnung gekoppelt ist. Bei anderen Ausführungsbeispielen kann auch eine eingangsseitige und eine ausgangsseitige Kopplung eingesetzt werden, wie es beispielsweise in Fig. 1B für beliebige Wärmepumpenmedien gezeigt ist.

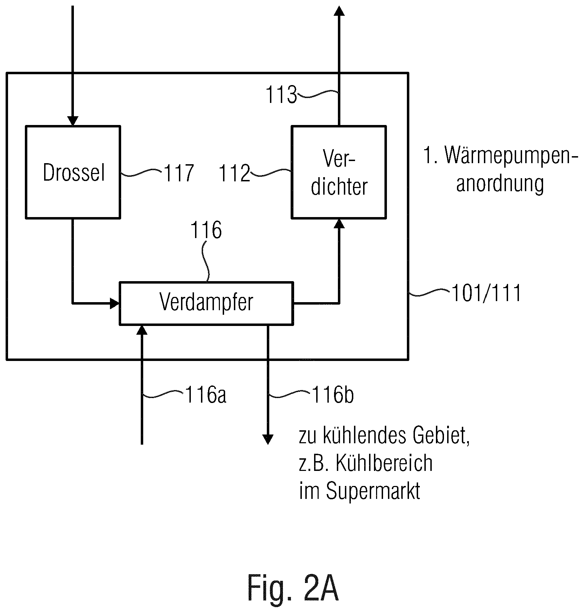

Fig. 1B zeigt gemäß einem zweiten Aspekt eine erste Wärmepumpenanordnung 111, die einen Verdichter mit einem Verdichterausgang aufweist, wobei ein Verdichter z.B. bei 112 in Fig. 2A gezeigt ist, und wobei der Verdichterausgang bei 113 in Fig. 2A dargestellt ist. Darüber hinaus umfasst das Wärmepumpensystem von Fig. 1B eine zweite Wärmepumpenanordnung 114, die einen Eingangsabschnitt 114a und einen Ausgangsabschnitt 114b aufweist. Darüber hinaus ist ein Koppler 115 vorgesehen, um die erste Wärmepumpenanordnung 111 und die zweite Wärmepumpenanordnung 114 miteinander zu koppeln. Bei dem in Fig. 1B gezeigten Aspekt umfasst der Koppler 115 einen ersten Wärmetauscher 115a und einen zweiten Wärmetauscher 115b. Der erste Wärmetauscher 115a ist mit dem Eingangsabschnitt 114a der zweiten Wärmepumpenanordnung verbunden. Ferner ist der zweite Wärmetauscher 115b mit dem Ausgangsabschnitt 114b der zweiten Wärmepumpenanordnung verbunden. In einer Implementierung können die beiden Wärmetauscher 115a, 115b auch untereinander verbunden sein, wie es bei 115c gezeigt ist.

Fig. 2A zeigt eine detailliertere Darstellung der ersten Wärmepumpenanordnung 101 oder 111. Insbesondere umfasst die erste Wärmepumpenanordnung bei der in Fig. 2A gezeigten Darstellung einen Verdampfer 116 und eine Drossel 117. In einem später noch dargestellten Verflüssigungsprozess verflüssigte Arbeitsflüssigkeit wird in die Drossel 117 eingespeist, und ihr Druckniveau wird auf das niedrigere Druckniveau am Eingang des Verdampfers 116 gebracht.

Der Verdampfer umfasst ferner einen Verdampferzulauf 116a, über den eine zu kühlende Arbeitsflüssigkeit der ersten Wärmepumpenanordnung in den Verdampfer 116 eingespeist wird. Ferner umfasst der Verdampfer 116 einen Verdampferablauf 116b, über den gekühlte Arbeitsflüssigkeit aus dem Verdampfer 116 in ein zu kühlendes Gebiet gebracht wird, das z.B. ein Kühlbereich in einem Supermarkt ist. Je nach Implementierung kann der Verdampfereinlass bzw. Zulauf 116a und der Verdampferauslass bzw. Ablauf 116b direkt mit dem zu kühlenden Gebiet gekoppelt sein oder aber über einen Wärmetauscher mit einem zu kühlenden Gebiet gekoppelt sein, so dass, am Beispiel von CO2, das flüssige CO2 nicht direkt in einem Kühlregal in entsprechenden Leitungen zirkuliert, sondern über einen Wärmetauscher ein anderes flüssiges Medium kühlt, das dann in den entsprechenden Leitungen eines Kühlregals oder einer Kühltruhe in einem Supermarkt beispielsweise zirkuliert.

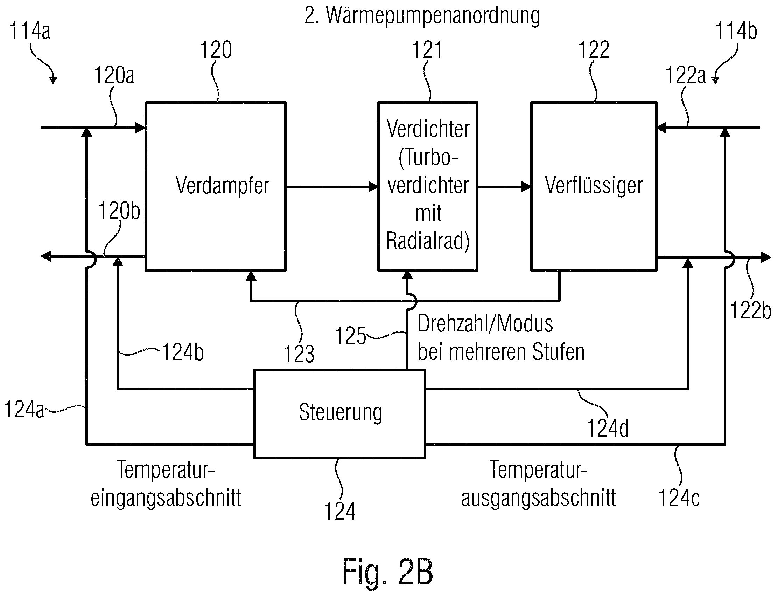

Fig. 2B zeigt eine Implementierung einer zweiten Wärmepumpenanordnung, die einen Verdampfer 120, einen Verdichter 121 und einen Verflüssiger 122 umfasst. Der Verdampfer 120 umfasst einen Verdampfereinlass 120a und einen Verdampferauslass 120b. Darüber hinaus umfasst der Verflüssiger 122 einen Verflüssigereinlass 122a und einen Verflüssigerauslass 122b. Am verdampferseitigen Ende der Wärmepumpenanordnung von Fig. 2B befindet sich der Eingangsabschnitt 114a, der mit dem ersten Wärmetauscher 115a des Kopplers 115 von Fig. 1B gekoppelt ist. Darüber hinaus stellt das verflüssigerseitige Ende der zweiten Wärmepumpenanordnung beispielhaft in Fig. 2B rechts gezeigt, den Ausgangsabschnitt 114b dar. Der Verflüssiger 122 und der Verdampfer 120 sind ferner über eine Drossel 123 miteinander verbunden, um verflüssigte Arbeitsflüssigkeit wieder zurück in den Verdampfer 120 zu bringen.

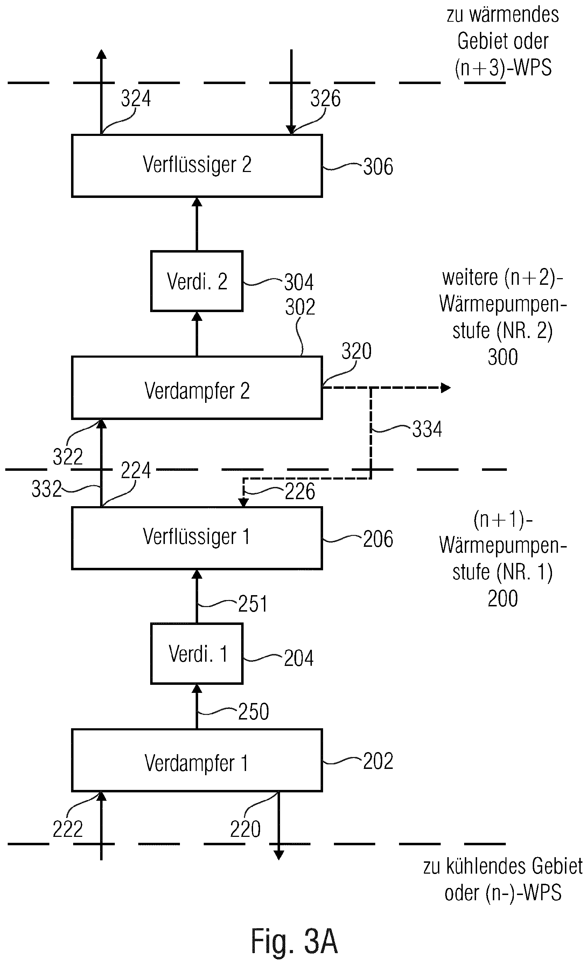

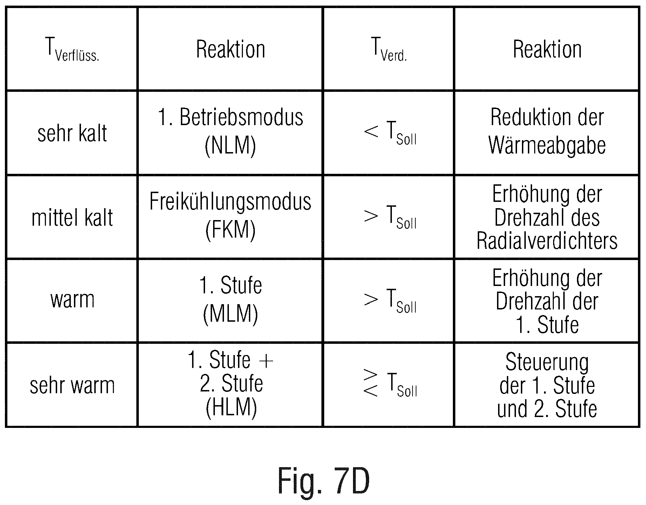

Die zweite Wärmepumpenanordnung umfasst bei bevorzugten Ausführungsbeispielen ferner eine Steuerung 124, die ausgebildet ist, um eine Temperatur im Eingangsabschnitt 114a und/oder eine Temperatur im Ausgangsabschnitt 114b zu erfassen. Hierfür kann eine Erfassung im Verdampferzulauf 120a, wie es bei 124a gezeigt ist, oder eine Erfassung im Verdampferablauf 120b, wie es bei 124b gezeigt ist, eine Temperaturerfassung im Verflüssigerzulauf 122a, wie es bei 124c gezeigt ist, oder eine Temperaturerfassung im Verflüssigerablauf, wie es bei 124d gezeigt ist, stattfinden. Abhängig von den erfassten Temperaturen ist die Steuerung 124 ausgebildet, um den Verdichter 121 zu steuern, der vorzugsweise ein Turboverdichter mit einem Radialrad ist. Zu diesem Zweck wird bei einer einstufigen zweiten Wärmepumpenanordnung bei dem Vorliegen einer Situation, bei der mehr Kühlleistung benötigt wird, die Drehzahl des Radialrads im Verdichter 121 über eine Steuerleitung 125 erhöht, oder es wird, wie es noch bezogen auf die Figuren 3A-7D dargestellt wird, eine Betriebsmodusumschaltung vorgenommen, um von einem Niederleistungsmodus (NLM), bei steigender Leistung in einen Freikühlungsmodus (FKM) und bei weiter steigender Leistung in einen Mittelleistungsmodus (MLM) und bei noch weiter steigender Leistung in einen Hochleistungsmodus (HLM) und jeweils umgekehrt zu gehen, wie es anhand von Fig. 7D dargestellt ist und später noch erläutert wird.

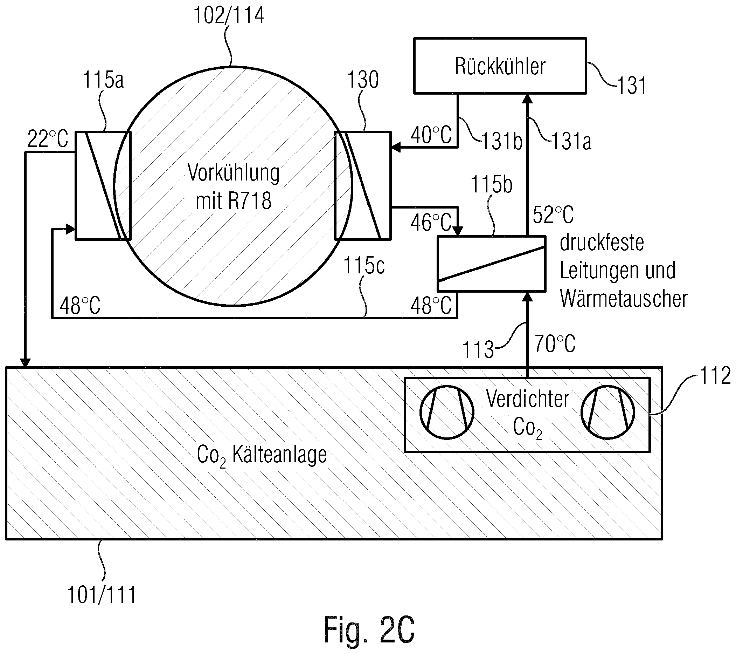

Fig. 2C zeigt ein Wärmepumpensystem, bei dem in der ersten Wärmepumpenanordnung 101/111 CO2 als Arbeitsmedium verwendet wird, während in der zweiten Wärmepumpenanordnung 102/114 Wasser als Arbeitsmedium verwendet wird. Wasser wird in der Wärmepumpentechnik auch als R718 bezeichnet.

Die erste Wärmepumpenanlage 101/111, die in Fig. 2C als "CO2-Kälteanlage" bezeichnet wird, ist über einen Koppler mit der zweiten Wärmepumpenanlage 102/114 thermisch gekoppelt. Bei dem in Fig. 2C gezeigten Ausführungsbeispiel besteht der Koppler aus dem ersten Wärmetauscher 115a und dem zweiten Wärmetauscher 115b.

Darüber hinaus ist bei dem in Fig. 2C gezeigten bevorzugten Ausführungsbeispiel ein dritter Kreislauf vorgesehen, der einen ausgangsseitigen Wärmetauscher 130 und einen Rückkühler 131 aufweist. Der Rückkühler 131 ist bei dem beispielhaften Anwendungsszenario, bei dem ein Supermarkt betrachtet wird, auf dem Dach oder auf der Nordseite im Schatten des Supermarktgebäudes angeordnet. Dort ist typischerweise ein Ventilator angeordnet, der einen Flüssigkeit-Luft-Wärmetauscher anbläst, um eine gute Wärmeübertragung von dem Rückkühler 131 in die Umgebung zu erreichen.

Fig. 2C zeigt beispielhafte Temperaturen. Ein CO2-Gas, das verdichtet worden ist und beispielsweise bei einem Druck von 70 bar und einer Temperatur von 70 °C vorliegt, wird in den zweiten Wärmetauscher 115b eingespeist. Beispielhafte ausgangsseitige Temperaturen des zweiten Wärmetauscher 115b liegen im Bereich von vielleicht 48 °C. Über eine Verbindungsleitung zwischen dem zweiten Wärmetauscher 115b und dem ersten Wärmetauscher 115a, die in Fig. 2C und Fig. 1B mit 115c bezeichnet ist, fließt das bereits abgekühlte, jedoch immer noch gasförmige CO2 in den ersten Wärmetauscher 115a, wo es dann mit einer Temperatur von etwa 22 °C ausgegeben wird. Dies bedeutet, dass eine eigentliche Verflüssigung des CO2-Gases bei den in Fig. 2C gezeigten Betriebstemperaturen erst im ersten Wärmetauscher 115a stattfindet, während jedoch im zweiten Wärmetauscher 115b bereits eine Abkühlung des Gases von über 20 °C stattfindet.

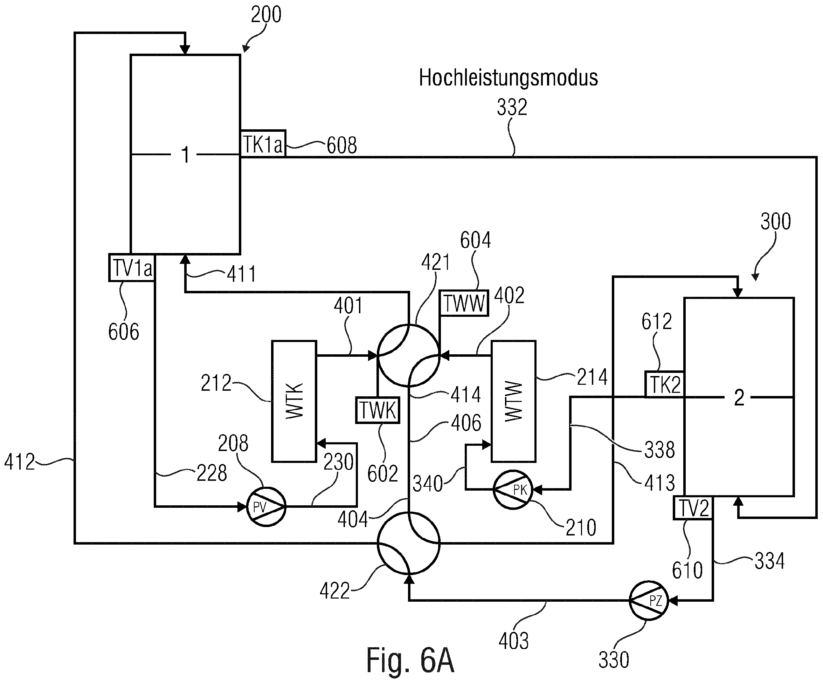

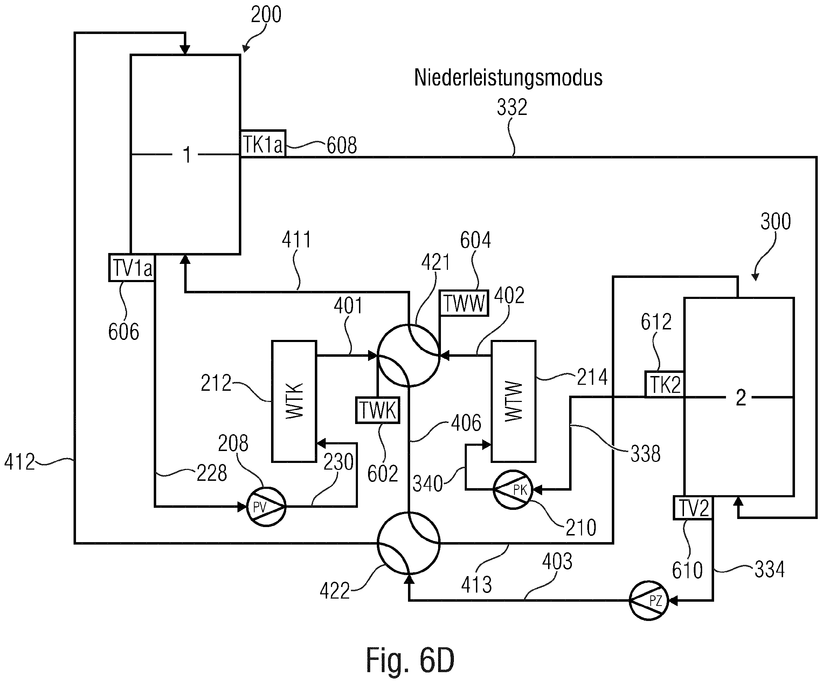

In der zweiten Wärmepumpenanordnung 102/114 wird Wasser als Medium verwendet. Die Abtrennung des Wasserkreislaufes nach außen findet eingangsseitig durch den ersten Wärmetauscher 115a und ausgangsseitig durch den weiteren Wärmetauscher 130 statt. Dies ermöglicht es, dass im dritten Kreislauf bzw. dem Rückkühlerkreislauf wieder ein anderer Druck verwendet werden kann, nämlich ein gut handhabbarer Druck zwischen 1 und 5 bar. Ferner wird als Medium im dritten Kreislauf vorzugsweise ein Wasser/Glykol-Gemisch verwendet. Der Ausgang des zweiten Wärmetauschers 115b auf Sekundärseite des Wärmetauscher 115b ist mit einem Eingang 131a des Rückkühlers 131 verbunden. Der Ausgang des Rückkühlers, der aufgrund der Wärmeabgabe an die Umgebung nur noch bei einer Temperatur von beispielsweise 40 °C liegt und mit 131b gezeichnet ist, geht durch den weiteren Wärmetauscher 130 in einen sekundärseitigen Eingang des zweiten Wärmetauscher 115b. Das in dem Rückkühlerkreislauf zirkulierende flüssige Medium wird im Wärmetauscher 130 auf eine Temperatur von beispielsweise 46 °C aufgrund der Abwärme der zweiten Wärmepumpenanordnung gebracht. Hierbei ist beispielsweise der Verflüssiger 122 von Fig. 2B, der in Fig. 2C nicht extra gezeigt ist, mit dem weiteren Wärmetauscher 130 gekoppelt. Alternativ und bezugnehmend auf die Fig. 6A bis 6D entspricht der Wärmetauscher 130 in Fig. 2C dem Wärmetauscher WTW 214 von Fig. 6A bis 6D.

Damit wird der Rückkühler-Kreislauf sowohl von der zweiten Wärmepumpenanordnung 102/114 als auch von der ersten Wärmepumpenanordnung 101/111 mit Abwärme versorgt.

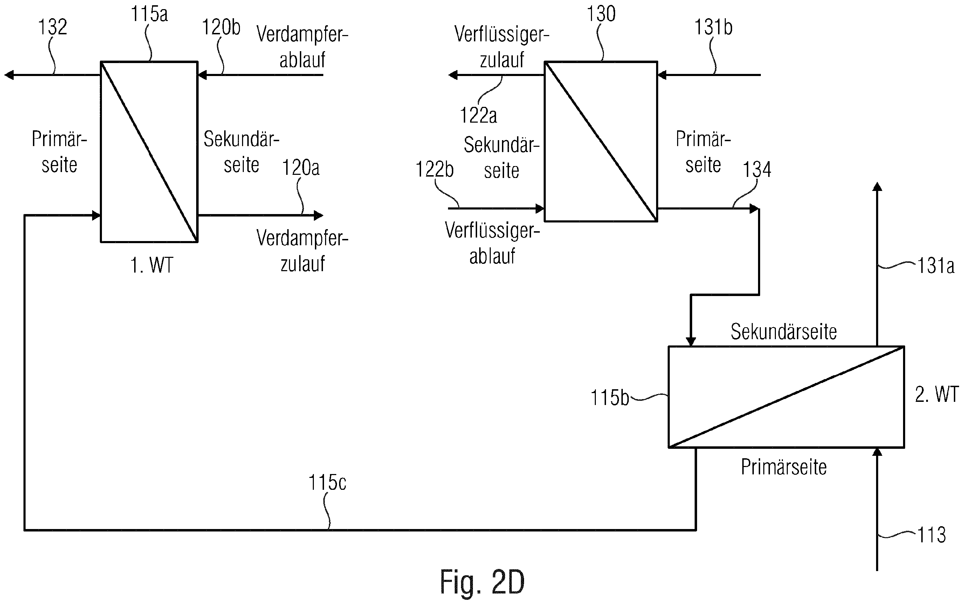

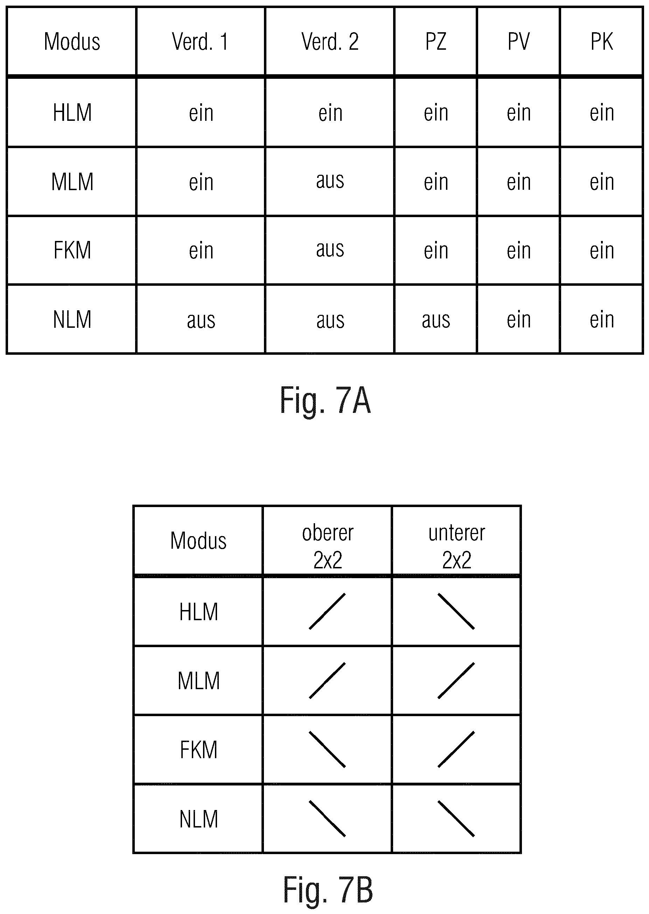

Fig. 2D zeigt eine detailliertere Darstellung der Wärmetauscher von Fig. 1B bzw. 2C. Der erste Wärmetauscher umfasst eine Primärseite mit einem primärseitigen Eingang 115c und einem primärseitigen Ausgang 132. Darüber hinaus ist die Sekundärseite des ersten Wärmetauschers 115a mit dem Verdampfer einer einstufigen Wärmepumpe verbunden oder aber mit jeweiligem Umschaltern auf einer Eingangsseitige der Wärmepumpe, um die diversen Modi, wie sie in den Fig. 6A bis 6D dargestellt sind, durchführen zu können. Der Eingangsabschnitt der zweiten Wärmepumpenanordnung umfasst somit im Falle einer einstufigen Wärmepumpe, bei der lediglich die Drehzahl des Verdichters steuerbar ist, jedoch keine Modusumschaltung erreichbar ist, den Verdampferablauf 120b und den Verdampferzulauf 120a, wie es in Fig. 2D eingezeichnet ist. Wenn jedoch eine vorzugsweise zweistufige Wärmepumpenanordnung verwendet wird, die eine erste Stufe und eine zweite Stufe hat, und die beispielsweise in zwei oder mehr und z. B. bis zu vier Modi betrieben werden kann, wie sie Bezug nehmend auf Fig. 7A-7D dargestellt sind, umfasst der Eingangsabschnitt die mit dem "WTK" bzw. "Wärmetauscher-Kalt", der in den Fig. 6A-6D mit 212 bezeichnet ist, verbundenen Leitungen 401, 230. Ferner umfasst der Ausgangsabschnitt dann die mit dem "WTW" bzw. "Wärmetauscher-Warm", der in den Fig. 6A-6D mit 214 bezeichnet ist, verbundenen Leitungen 402, 340.

Insbesondere stellt bei einer bevorzugten Implementierung der Wärmetauscher-Kalt 212 in den Fig. 6A-6D den Wärmetauscher 115a von Fig. 2D dar, und stellt der zweite Wärmetauscher "WTW" 214 von Fig. 6A bis 6D den weiteren Wärmetauscher 130 von Fig. 2D dar.

In einer Implementierung kann jedoch ohne Weiteres ein weiterer Wärmetauscher zwischen dem Wärmetauscher WTK 212 von Fig. 6A bis 6D und dem ersten Wärmetauscher 115a angeordnet sein, oder kann ein weiterer Wärmetauscher zwischen dem Wärmetauscher WTW 214 von Fig. 6A bis 6D und dem weiteren Wärmetauscher 130 angeordnet sein, um die innere Wärmepumpenanordnung von dem ersten Wärmetauscher und/oder dem weiteren Wärmetauscher bzw. dem dritten Kreislauf zwischen dem weiteren Wärmetauscher 130 und dem Rückkühler 131 von Fig. 2C weiter zu entkoppeln.

Dies bedeutet, dass mit dem ersten Wärmetauscher daher nicht unbedingt der Verdampferablauf 120b und dem Verdampferzulauf 120a verbunden sein müssen, sondern alternativ, die Leitungen 401, 230 von Fig. 6A bis 6D, die je nach Stellung der Schalter 421, 422 mit entsprechenden Anschlüssen/weiteren Leitungen verbunden werden, um unterschiedliche Betriebsmodi zu erreichen.

Analog ist der Ausgangsabschnitt 114b der zweiten Wärmepumpenanordnung ausgebildet. Der Ausgangsabschnitt muss nicht unbedingt mit dem Verflüssigerzulauf und dem Verflüssigerablauf verbunden sein, sondern kann mit den Leitungen 402, 340 von Fig. 6A bis 6D verbunden sein, die dann je nach Zustand/Schaltmodus über die Umschalter 421, 422 mit entsprechenden anderen Komponenten gekoppelt sind, wie es aus den Fig. 6A bis 6D hervorgeht.

Darüber hinaus umfasst der zweite Wärmetauscher 115b ebenfalls eine Primärseite mit einem Primäreingang 113, der vorzugsweise mit dem Verdichterausgang 113 der ersten Wärmepumpenanordnung gekoppelt ist, und einen primärseitigen Ausgang 115c, der mit einem primärseitigen Eingang des ersten Wärmetauschers 115a gekoppelt ist.

Die Sekundärseite des zweiten Wärmetauschers umfasst einen sekundärseitigen Eingang 134, der mit einem primärseitigen Ausgang des weiteren Wärmetauschers 130 gekoppelt ist. Der sekundärseitige Ausgang 131a des zweiten Wärmetauschers 115b wiederum ist mit einem Eingang 131a des Rückkühlers 131 verbunden. Der Ausgang 131b des Rücckühlers wiederum ist mit dem primärseitigen Eingang des weiteren Wärmetauschers 130 verbunden, wie es in Fig. 2D gezeigt ist.

Wie es bereits dargelegt worden ist, erreichen die erfindungsgemäßen Wärmepumpensysteme gemäß den beiden Aspekten, dass insbesondere eine Kälteanlage, also ein Wärmepumpensystem zum Kühlen, konstruktiv möglichst einfach gestaltet wird, dass die Nachteile der Umweltschädlichkeit, der Gefährlichkeit, der Leistungseffizienz oder des apparativen Aufbaus zumindest teilweise einzeln oder in Kombination ausgeräumt werden.

Hierzu wird eine Kälteanlage gemäß dem ersten Aspekt bezüglich der Kaskadierung von CO2 und Wasser eingesetzt, oder ein Wärmepumpensystem gemäß dem zweiten Aspekt, bei der eine eingangs- und ausgangsseitige Kopplung von zwei Wärmepumpenstufen, die mit beliebigen Arbeitsmedien betrieben werden, erreicht wird, wobei vorzugsweise beide Aspekte in Kombination eingesetzt werden, dass also die Kopplung der CO2-Wärmepumpe und der Wasser-Wärmepumpe über einen eingangsseitigen und ausgangsseitigen Wärmetauscher stattfindet.

Ausführungsbeispiele der vorliegenden Erfindung erreichen, dass ein effizienter Betrieb der CO2-Kälteanlage bei hohen Umgebungstemperaturen von beispielsweise über 30 °C erreicht wird, und zwar anders als vom Stand der Technik vorgeschlagen, keine technisch aufwändigen Lösungen notwendig sind. Statt dessen wird bei hohen Außentemperaturen eine unaufwändig realisierbare Vorkühlung eingesetzt.

Hierzu wird gemäß einem Aspekt die CO2-Kälteanlage für eine Wärmeabfuhr mit einem Kühlsystem mit Wasser als Kältemittel thermisch gekoppelt. Die CO2-Kälteanlage wird mittels eines Wärmeübertragers thermisch mit dem Kühlsystem gekoppelt. Hierdurch kann auf konstruktiv einfache Weise eine Wärmeabfuhr von der CO2-Kälteanlage und somit eine effektive Vorkühlung erreicht werden.

Damit wird erreicht, dass Kondensationstemperaturen stets unter 25 °C gesenkt werden können, so dass der CO2-Prozess ganzjährig unterkritisch, und damit gleichzeitig effizient realisiert wird. Technisch aufwändige Lösungen, wie beispielsweise zusätzliche oder leistungsfähige Verdichter bzw. weitere, die CO2-Kälteanlage verkomplizierenden Komponenten können so entfallen und die Rückkühlung der Gesamtanlage erfolgt ganzjährig bei einem Druck, wie er bei derartigen Anlagen üblicherweise im Rückkühlkreis mit Wasser oder in einem Wasser-Rückkühl-Gemisch, je nach Temperatur des Aufstellorts, herrscht. Die Gesamtanlage kann so kompakt und mit einer geringen CO2-Füllmenge realisiert werden.

Bei dieser Lösung ergibt sich ein kompaktes Gesamtsystem, bei dem die gesamte Rücckühlwärme über ein Wasser bzw. Wasser-Sole-Gemisch an die Umgebung abgegeben wird. Kühler des CO2-Prozesses besteht aus den beiden Wärmetauschern 115a, 115b, wobei bei geringen Außentemperaturen die gesamte Rückkühlleistungen zuerst vom CO2 durchströmten Wärmeübertrager, also dem zweiten Wärmeübertrager 115b an den Rücckühlkreislauf mit dem Rückkühler 131 von Fig. 2C beispielsweise übertragen wird. Mit steigenden Temperaturen im Rückkühlkreislauf wird auch im ersten Wärmeübertrager, d.h. dem ersten Wärmetauscher 115a, der mit der zweiten Wärmepumpenanordnung 102/114 zur Vorkühlung gekoppelt ist, Wärme vom CO2-Kreislauf abgegeben, so dass eine Temperatur von beispielsweise 22 °C hinter dem ersten Wärmeübertrager nie überschritten wird, wie es beispielhaft in Fig. 2C dargelegt ist.

Mit steigender Temperatur im Rückkühlkreislauf verschiebt sich die Rückkühlleistung vom zweiten durchströmten Wärmeübertrager auf den ersten. Bei Temperaturen im Rückkühlkreislauf, die es ermöglichen, die 22 °C-Temperatur bereits hinter der zweiten Wärmeübertragung zu erreichen, schaltet die zweite Wärmepumpenstufe 102/114 zur Vorkühlung komplett ab. Dies bedeutet, dass es durch die hier vorgeschlagene Einbindung der Vorkühlung stets möglich ist, mit minimalem Energieaufwand die gesamte Anlage energetisch optimal zu betreiben.

Bei bevorzugten Ausführungsbeispielen ist es vorgesehen, das Kühlsystem über den thermischen Koppler, und insbesondere über den zweiten Wärmetauscher 115b thermisch mit dem Verdichter der CO2-Kälteanlage zu koppeln, derart, dass der verdichtete und damit überhitzte CO2-Dampf der ersten Wärmepumpenanlage gekühlt wird und schließlich vom Wärmetauscher 115a von Fig. 2C beispielsweise verflüssigt wird.

Im Vergleich zum Standardprozess wird somit nach der CO2-Verdichterstufe, beispielsweise der Stufe 112 von Fig. 2C, der überhitzte Dampf vorgekühlt. Bei hohen Außentemperaturen, wie sie im Sommer auftreten, werden so etwa 50% der Rückkühlwärme des CO2-Prozesses als Enthitzungswärme an den Wasser- oder Wasser/Glykol-Kreis, in dem der Rückkühler 131 angeordnet ist, abgegeben, und an die Wärmesenke, also zum Beispiel die Umgebung abgegeben. Die Rückkühlleistung der vorgeschlagenen Kälteanlage kann parallel zur oder vor der Einspeisung durch den CO2-Prozess erfolgen.

Sinken die Temperaturen wetterbedingt im Wasser/Glykol-Kreis, so steigt die abgegebene Rückkühl- bzw. Enthitzungsleistung des CO2-Prozesses in der Vorkühlung an, und die erforderliche Leistung der ersten Wärmepumpenanordnung an. Entsprechend sinkt auch die Temperaturspeisung zwischen der wärmeaufnehmenden und der wärmeabgebenden Seite der Kältemaschine. Hierzu ist der Einsatz von Turboverdichtern, wie es beispielsweise bei 121 in Fig. 2B dargestellt ist, besonders vorteilhaft, da die Drehzahl die Kälteleistung und den Druck/Temperaturhub gleichzeitig beeinflusst. Mit steigender Drehzahl nehmen sowohl Leistung als auch Temperaturhub zu.

Um bei kleineren Kälteleistungen, also bei Kälteleistungen zwischen 30 kW bis 300 kW die Vorteile der Turboverdichtung in dem Einsatzgebiet der Vorkühlung nutzen zu können, ist das Kältemittel Wasser (R 718) ideal geeignet. Durch die niedrige volumetrische Kälteleistung ist der Einsatz von Strömungsmaschinen bereits bei kleineren Leistungen unterhalb von 50 kW möglich. Die zweite Wärmepumpenanordnung ist vorzugsweise ausgebildet, um Wärmeleistungen von unter 100 kW zu liefern.

Fig. 2C zeigt die zweite Wärmepumpenstufe 102/114 schematisch als Vorkühlung, die als Kälteanlage ausgebildet ist, welche Wasser als Kältemittel verwendet. Vorzugsweise wird als Kälteanlage beispielsweise der eChiller der Firma Efficient Energy GmbH eingesetzt. Der verwendete eChiller verfügt in einer Ausbaustufe über eine maximale Kälteleistung von 40 kW und ermöglicht bei der Einbringung in den CO2-Prozess zur Abfuhr der Kondensationswärme einen CO2-Prozess, der ganzjährig unterkritisch betrieben werden kann, und der eine gesamte Rückkühlleistung von bis zu 80 kW hat. Höher Leistungen lassen sich durch parallele Schaltung mehrerer Kälteanlagen zur Vorkühlung realisieren. Für die thermische Kopplung der Kälteanlage 102/114 an die CO2-Kälteanlage 101/111 ist der Wärmeübertrager bzw. thermische Koppler 115 vorgesehen, welcher den ersten Wärmetauscher 115a und den zweiten Wärmetauscher 115b umfasst, welcher vorzugsweise mit dem Verdichter 112 der CO2-Kälteanlage gekoppelt ist. Dadurch wird der überhitzte Dampf aus dem CO2-Prozess vorgekühlt. Die vorliegenden Erfindung gemäß dem beschriebenen Ausführungsbeispiel ist dahin gehend vorteilhaft, dass eine Wärmerückgewinnung ebenfalls leicht zu realisieren ist, indem die Enthitzungswärme des CO2-Prozesses nicht über den Rückkühler 131 über die Umgebung abgegeben wird, sondern in eine Nutz-Wärmesenke abgegeben wird. In diesem Fall wäre der Rückkühler in einer Umgebung angeordnet, in der die Abwärme nutzbringend einsetzbar ist.

Nachfolgend wird auf die Fig. 3A-7D eingegangen, die eine zwei- bzw. mehrstufige Wärmepumpenanordnung zeigen, wie sie beispielsweise im eChiller realisiert ist. In den nachfolgenden Figurenbeschreibungen wird die zweite Wärmepumpenanordnung aus den Fig. 1A bis 2C auch als Wärmepumpenanlage bezeichnet.

Fig. 3A zeigt eine solche Wärmepumpenanlage, wobei die Wärmepumpenanlage bzw. zweite Wärmepumpenanordnung 102, 114 eine beliebige Anordnung an Pumpen oder Wärmetauschern aufweisen kann.

Insbesondere umfasst eine Wärmepumpenanlage, wie sie in Fig. 3A gezeigt ist, eine Wärmepumpenstufe 200, d.h. die Stufe n+1 mit einem ersten Verdampfer 202, einem ersten Verdichter 204 und einem ersten Verflüssiger 206, wobei der Verdampfer 202 über dem Dampfkanal 250 mit dem Verdichter 204 gekoppelt ist, und sobald der Verdichter 204 über den Dampfkanal 251 mit dem Verflüssiger 206 gekoppelt ist. Es wird bevorzugt, wieder die verschränkte Anordnung zu verwenden, es können jedoch auch beliebige Anordnungen in der Wärmepumpenstufe 200 eingesetzt werden. Der Eingang 222 in den Verdampfer 202 und der Ausgang 220 aus dem Verdampfer 202 sind je nach Implementierung entweder mit einem zu kühlenden Gebiet oder mit einem Wärmetauscher, wie beispielsweise dem Wärmetauscher 212 zu dem zu kühlenden Gebiet oder mit einer weiteren vorher angeordneten Wärmepumpenstufe, nämlich beispielsweise der Wärmepumpenstufe n verbunden, wobei n eine ganze Zahl größer oder gleich Null ist.

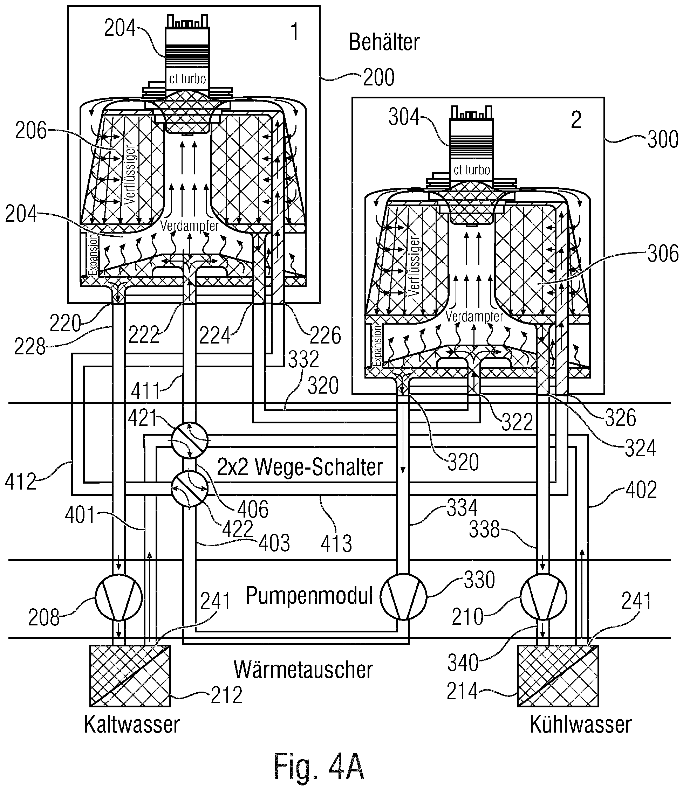

Darüber hinaus umfasst die Wärmepumpenanlage in Fig. 3A eine weitere Wärmepumpenstufe 300, d.h. die Stufe n+2, mit einem zweiten Verdampfer 302, einem zweiten Verdichter 304 und einem zweiten Verflüssiger 306. Insbesondere ist der Ausgang 224 des ersten Verflüssigers mit einem Verdampfereingang 322 des zweiten Verdampfers 320 über eine Verbindungsleitung 332 verbunden. Der Ausgang 320 des Verdampfers 302 der weiteren Wärmepumpenstufe 300 kann je nach Implementierung mit dem Einlass in den Verflüssiger 206 der ersten Wärmepumpenstufe 200 verbunden sein, wie es durch eine gestrichelte Verbindungsleitung 334 gezeigt ist. Der Ausgang 320 des Verdampfers 302 kann jedoch auch, wie es noch anhand der Fig. 4A, 6A bis 6D und 5 dargestellt ist, mit einem steuerbaren Wegemodul verbunden sein, um alternative Implementierungen zu erreichen. Generell ist jedoch aufgrund der festen Verbindung des Verflüssigerausgangs 224 der ersten Wärmepumpenstufe mit dem Verdampfereingang 322 der weiteren Wärmepumpenstufe eine Kettenschaltung erreicht.

Diese Kettenschaltung stellt sicher, dass jede Wärmepumpenstufe mit einer möglichst geringen Temperaturspreizung arbeiten muss, also mit einer möglichst geringen Differenz zwischen der erwärmten Arbeitsflüssigkeit und der gekühlten Arbeitsflüssigkeit. Durch Hintereinanderschalten, also durch eine Kettenschaltung solcher Wärmepumpenstufen wird damit erreicht, dass dennoch eine ausreichend große Gesamtspreizung erreicht wird. Die Gesamtspreizung wird somit in mehrere Einzelspreizungen aufgeteilt. Die Kettenschaltung ist insbesondere deswegen von besonderem Vorteil, weil damit wesentlich effizienter gearbeitet werden kann. Der Verbrauch an Verdichterleistung für zwei Stufen, die jeweils eine kleinere Temperaturspreizung bewältigen müssen, ist kleiner als die Verdichterleistung für eine einzige Wärmepumpenstufe, die eine große Temperaturspreizung erreichen muss. Außerdem sind die Anforderungen an die einzelnen Komponenten bei zwei in Kette geschalteten Stufen in technischer Hinsicht entspannter.

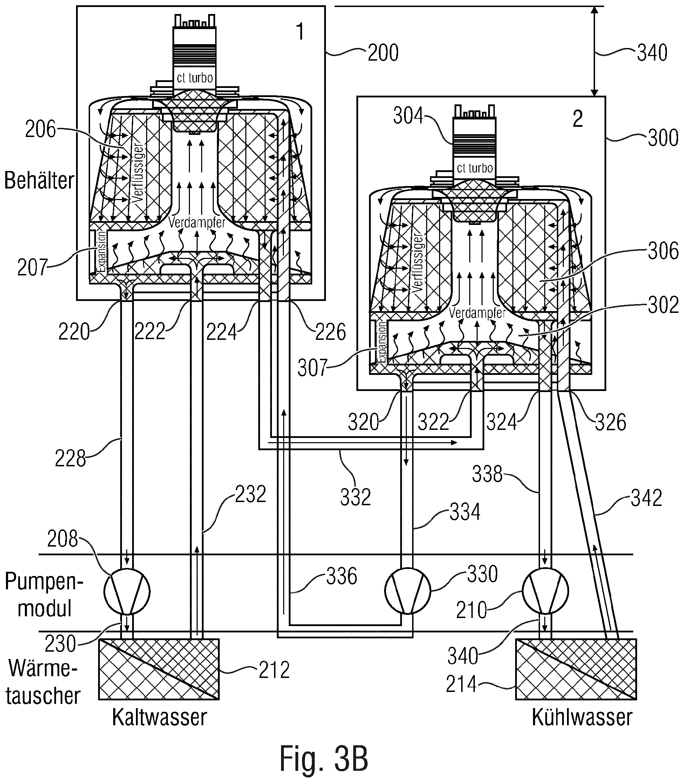

Wie es in Fig. 3A gezeigt ist, kann der Verflüssigerausgang 324 des Verflüssigers 306 der weiteren Wärmepumpenstufe 300 mit dem zu wärmenden Gebiet gekoppelten, wie es z.B. Bezug nehmend auf Fig. 3B anhand des Wärmetauschers 214 dargestellt ist. Alternativ kann jedoch auch der Ausgang 324 des Verflüssigers 306 der zweiten Wärmepumpenstufe wieder über ein Verbindungsrohr mit einem Verdampfer einer weiteren Wärmepumpenstufe, also der (n+3)-Wärmepumpenstufe gekoppelt sein. Fig. 3A zeigt somit je nach Implementierung eine Kettenschaltung von z.B. vier Wärmepumpenstufen, wenn n=1 genommen wird. Wenn jedoch n beliebig genommen wird, zeigt Fig. 3A eine Kettenschaltung von beliebig vielen Wärmepumpenstufen, wobei insbesondere die Kettenschaltung der Wärmepumpenstufe (n+1), die mit 200 bezeichnet ist, und der weiteren Wärmepumpenstufe 300, die mit (n+2) bezeichnet ist, detaillierter ausgeführt ist und die n- Wärmepumpenstufe genauso wie die (n+3)- Wärmepumpenstufe auch nicht als Wärmepumpenstufe, sondern jeweils als Wärmetauscher oder als zu kühlendes bzw. zu erwärmendes Gebiet ausgeführt sein kann.

Vorzugsweise ist, wie es z.B. in Fig. 3B gezeigt ist, der Verflüssiger der ersten Wärmepumpenstufe 200 oberhalb des Verdampfers 302 der zweiten Wärmepumpenstufe angeordnet, so dass die Arbeitsflüssigkeit durch die Verbindungsleitung 332 aufgrund der Schwerkraft fließt. Insbesondere bei der in Fig. 3B gezeigten speziellen Implementierung der einzelnen Wärmepumpenstufen ist der Verflüssiger ohnehin oberhalb des Verdampfers angeordnet. Diese Implementierung ist besonders günstig, weil selbst bei miteinander ausgerichteten Wärmepumpenstufen die Flüssigkeit bereits aus dem Verflüssiger der ersten Stufe in den Verdampfer der zweiten Stufe durch die Verbindungsleitung 332 fließt. Zusätzlich wird es jedoch bevorzugt, einen Höhenunterschied zu erreichen, der wenigstens 5 cm zwischen der Oberkante der ersten Stufe und der Oberkante der zweiten Stufe umfasst. Diese Abmessung, die bei 340 in Fig. 3B gezeigt ist, beträgt jedoch vorzugsweise 20 cm, da dann für die beschriebene Implementierung eine optimale Wasserleitung von der ersten Stufe 200 zu der zweiten Stufe 300 über die Verbindungsleitung 332 stattfindet. Dadurch wird ferner erreicht, dass in der Verbindungsleitung 332 keine spezielle Pumpe benötigt wird. Diese Pumpe wird daher eingespart. Es wird lediglich die Zwischenkreispumpe 330 benötigt, um von dem Ausgang 320 des Verdampfers der zweiten Stufe 300, die niedriger als die erste Stufe angeordnet ist, die Arbeitsflüssigkeit zurück in den Kondensierer der ersten Stufe, also in den Eingang 226 zu bringen. Hierzu ist der Ausgang 320 über die Rohrleitung 334 mit der Saugseite der Pumpe 330 verbunden. Die Pumpseite der Pumpe 330 ist über das Rohr 336 mit dem Eingang 226 des Kondensierers verbunden. Die in Fig. 3B gezeigte Kettenschaltung der beiden Stufen entspricht Fig. 3A mit der Verbindung 334. Vorzugsweise ist die Zwischenkreispumpe 330 ebenfalls wie die beiden anderen Pumpen 208 und 210 unten angeordnet, da dann auch in der Zwischenkreisleitung 334 eine Kavitation verhindert werden kann, weil aufgrund der Platzierung der Zwischenkreispumpe 330 im Fallrohr 334 ein ausreichender Staudruck der Pumpe erreicht wird.

Obgleich in Fig. 3B die Konfiguration gemäß dem ersten Aspekt gezeigt ist, dass also die Wärmetauscher 212, 214 unterhalb der Pumpen 208, 210 und 330 angeordnet sind, kann auch die Anordnung der Pumpen 208, 210 neben den Wärmetauschern 212, 214 verwendet werden, wie es gemäß dem zweiten Aspekt dargelegt worden ist.

Wie es in Fig. 3B gezeigt ist, umfasst die erste Stufe das Expansionselement 207 und die zweite Stufe ein Expansionselement 307. Da jedoch über die Verbindungsleitung 332 ohnehin Arbeitsflüssigkeit aus dem Verflüssiger 206 der ersten Stufe austritt, ist das Expansionselement 207 entbehrlich. Dagegen wird das Expansionselement 307 in der unteren Stufe vorzugsweise verwendet. So kann bei einem Ausführungsbeispiel die erste Stufe ohne Expansionselement gebaut werden, und es wird lediglich ein Expansionselement 307 in der zweiten Stufe vorgesehen. Da es jedoch bevorzugt wird, alle Stufen gleich zu bauen, ist auch in der Wärmepumpenstufe 200 das Expansionselement 207 vorgesehen. Wenn dasselbe implementiert ist, um eine Blasensiedung zu unterstützen, ist das Expansionselement 207 trotz der Tatsache, dass es unter Umständen keine verflüssigte Arbeitsflüssigkeit in den Verdampfer leitet, sondern lediglich erwärmten Dampf, ebenfalls hilfreich.

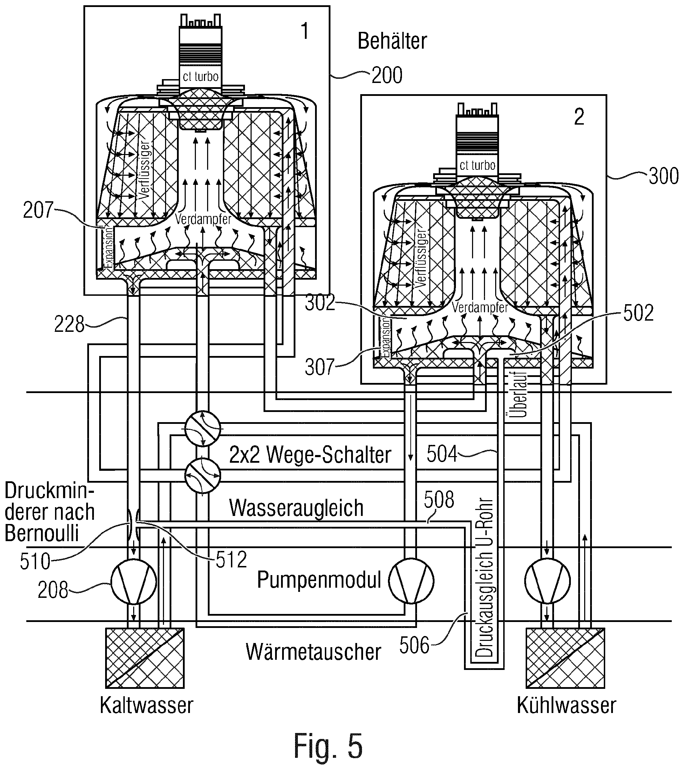

Dennoch hat sich herausgestellt, dass sich bei der in Fig. 3B gezeigten Anordnung Arbeitsflüssigkeit in dem Verdampfer 302 der zweiten Wärmepumpenstufe 300 ansammelt. Es wird daher, wie es in Fig. 5 dargestellt ist, eine Maßnahme vorgenommen, um Arbeitsflüssigkeit aus dem Verdampfer 302 der zweiten Wärmepumpenstufe 300 in den Verdampferkreis der ersten Stufe 200 zu bringen. Hierfür ist eine Überlaufanordnung 502 in dem zweiten Verdampfer 302 der zweiten Wärmepumpenstufe angeordnet, um ab einem vordefinierten maximalen Arbeitsflüssigkeitspegel in dem zweiten Verdampfer 302 Arbeitsflüssigkeit wegzuführen. Ferner ist eine Flüssigkeitsleitung 504, 506, 508 vorgesehen, die einerseits mit der Überlaufanordnung 502 gekoppelt ist, und die andererseits mit einer Saugseite der ersten Pumpe 208 an einer Koppelstelle 512 gekoppelt ist. An der Koppelstelle 512 ist ein Druckminderer 510 vorhanden, der vorzugsweise als Druckminderer nach Bernoulli, also als eine Rohr- oder Schlauchengstelle ausgebildet ist. Die Flüssigkeitsleitung umfasst einen ersten Verbindungsabschnitt 504, einen U-förmigen Abschnitt 506 und einen zweiten Verbindungsabschnitt 508. Vorzugsweise hat der U-förmige Abschnitt 506 eine vertikale Höhe in der Betriebsposition, die wenigstens gleich 5 cm und vorzugsweise 15 cm ist. Damit wird ein selbstregelndes System erhalten, das ohne Pumpe arbeitet. Bei zu hohem Wasserstand in dem Verdampfer 302 des unteren Behälters 300 läuft Arbeitsflüssigkeit über die Verbindungsleitung 504 in das U-Rohr 506. Das U-Rohr ist über die Verbindungsleitung 508 an der Koppelstelle 512 an dem Druckminderer mit der Saugseite der Pumpe 208 gekoppelt. Durch die erhöhte Strömungsgeschwindigkeit vor der Pumpe aufgrund der Engstelle 510 sinkt der Druck und Wasser aus dem U-Rohr 506 kann aufgenommen werden. Im U-Rohr stellt sich ein stabiler Wasserstand ein, der dem Druck vor der Pumpe in der Engstelle und im Verdampfer des niedrigeren Behälters genügt. Gleichzeitig stellt das U-Rohr 506 jedoch eine Dampfbarriere dar, dahingehend, dass kein Dampf aus dem Verdampfer 302 in die Saugseite der Pumpe 208 gelangen kann. Die Expansionsorgane 207 bzw. 307 sind vorzugsweise ebenfalls als Überlaufanordnungen ausgebildet, um bei Überschreiten eines vorbestimmten Pegels in einem jeweiligen Verflüssiger Arbeitsflüssigkeit in den jeweiligen Verdampfer zu bringen. Damit werden die Füllstände sämtlicher Behälter, also sämtlicher Verflüssiger und Verdampfer in beiden Wärmepumpenstufen automatisch, ohne Aufwand und ohne Pumpen aber selbstregelnd eingestellt.

Dies ist insbesondere von Vorteil, weil damit Wärmepumpenstufen je nach Betriebsmodus in Betrieb oder außer Betrieb genommen werden können.

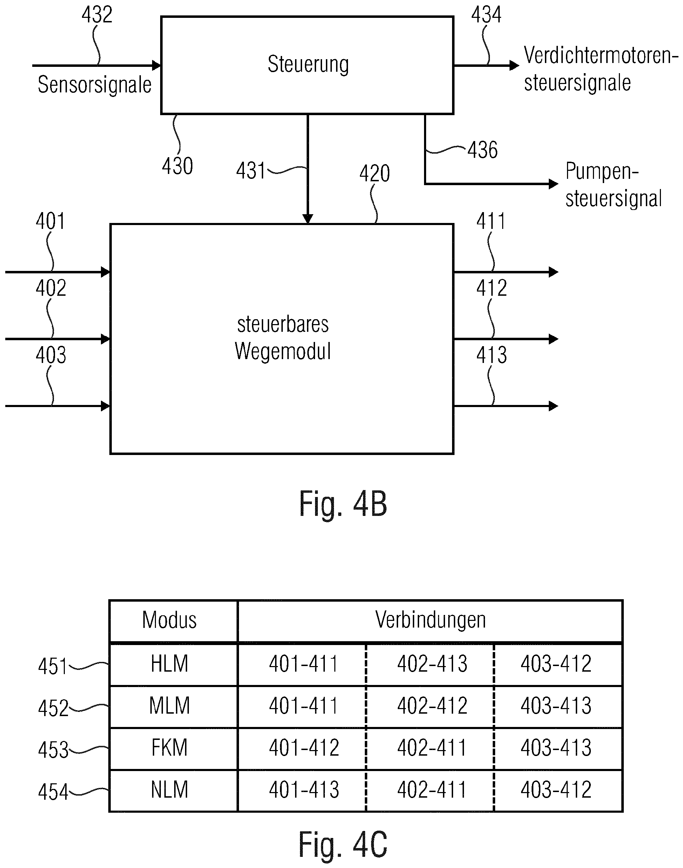

Fig. 4A und 5 zeigen bereits eine detaillierte Darstellung eines steuerbaren Wegemoduls aufgrund des oberen 2x2-Wege-Schalters 421 und des unteren 2x2-Wege-Schalters 422. Fig. 4B zeigt eine allgemeine Implementierung des steuerbaren Wegemoduls 420, das durch die beiden seriell geschalteten 2x2-Wege-Schalter 421 und 422 implementiert werden kann, das jedoch auch alternativ implementiert werden. kann.

Das steuerbare Wegemodul 420 von Fig. 4B ist mit einer Steuerung 430 gekoppelt, um von dieser über eine Steuerleitung 431 angesteuert zu werden. Die Steuerung empfängt als Eingangssignale Sensorsignale 432 und liefert ausgangsseitig Pumpensteuersignale 436 und/oder Verdichtermotorensteuersignale 434. Die Verdichtermotorensteuersignale 434 führen zu den Verdichtermotoren 204, 304, wie sie beispielsweise in Fig. 4A gezeigt sind, und die Pumpensteuersignale 436 führen zu den Pumpen 208, 210, 330. Je nach Implementierung können die Pumpen 208, 210 jedoch fest, also ungesteuert ausgeführt werden, weil sie ohnehin in jedem der anhand der Fig. 7A, 7B beschriebenen Betriebsmodi laufen. Lediglich die Zwischenkreispumpe 330 könnte daher durch ein Pumpensteuersignal 436 gesteuert werden.

Das steuerbare Wegemodul 420 umfasst einen ersten Eingang 401, einen zweiten Eingang 402 und einen dritten Eingang 403. Wie es beispielsweise in Fig. 4A gezeigt ist, ist der erste Eingang 401 mit dem Ablauf 241 des ersten Wärmetauschers 212 verbunden. Darüber hinaus ist der zweite Eingang 402 des steuerbaren Wegemoduls mit dem Rücklauf bzw. Ablauf 243 des zweiten Wärmetauschers 214 verbunden. Darüber hinaus ist der dritte Eingang 403 des steuerbaren Wegemoduls 420 mit einer Pumpseite der Zwischenkreispumpe 330 verbunden.

Ein erster Ausgang 411 des steuerbaren Wegemoduls 420 ist mit einem Eingang 222 in die erste Wärmepumpenstufe 200 gekoppelt. Ein zweiter Ausgang 412 des steuerbaren Wegemoduls 420 ist mit einem Eingang 226 in den Verflüssiger 206 der ersten Wärmepumpenstufe verbunden. Darüber hinaus ist ein dritter Ausgang 413 des steuerbaren Wegemoduls 420 mit dem Eingang 326 in den Verflüssiger 306 der zweiten Wärmepumpenstufe 300 verbunden.

Die verschiedenen Eingang/Ausgang-Verbindungen, die durch das steuerbare Wegemodul 420 erreicht werden, sind in Fig. 4C dargestellt.

In einem Modus, dem Hochleistungsmodus (HLM) ist der erste Eingang 401 mit dem ersten Ausgang 411 verbunden. Ferner ist der zweite Eingang 402 mit dem dritten Ausgang 413 verbunden. Darüber hinaus ist der dritte Eingang 403 mit dem zweiten Ausgang 412 verbunden, wie es in der Zeile 451 von Fig. 4C dargestellt ist.

Im Mittelleistungsmodus (MLM), in dem lediglich die erste Stufe aktiv ist und die zweite Stufe inaktiv ist, also der Verdichtermotor 304 der zweiten Stufe 300 abgeschaltet ist, ist der erste Eingang 401 mit dem ersten Ausgang 411 verbunden. Ferner ist der zweite Eingang 402 mit dem zweiten Ausgang 412 verbunden. Darüber hinaus ist der dritte Eingang 403 mit dem dritten Ausgang 413 verbunden, wie es in Zeile 452 dargestellt ist. Zeile 453 zeigt den Freikühlungsmodus, in dem der erste Eingang mit dem zweiten Ausgang verbunden ist, also der Eingang 401 mit dem Ausgang 412. Darüber hinaus ist der zweite Eingang 402 mit dem ersten Ausgang 411 verbunden. Schließlich ist der dritte Eingang 403 mit dem dritten Ausgang 413 verbunden.

Im Niederleistungsmodus (NLM), der in Zeile 454 dargestellt ist, ist der erste Eingang 401 mit dem dritten Ausgang 413 verbunden. Darüber hinaus ist der zweite Eingang 402 mit dem ersten Ausgang 411 verbunden. Schließlich ist der dritte Eingang 403 mit dem zweiten Ausgang 412 verbunden.

Es wird bevorzugt, das steuerbare Wegemodul durch die zwei seriell angeordneten 2-Wege-Schalter 421 und 422 zu implementieren, wie sie z.B. in Fig. 4A dargestellt sind, oder wie sie auch in den Fig. 6A bis 6D dargestellt sind. Hierbei hat der erste 2-Wege-Schalter 421 den ersten Eingang 401, den zweiten Eingang 402, den ersten Ausgang 411 und einen zweiten Ausgang 414, der über eine Zwischenverbindung 406 mit einem Eingang 404 des zweiten 2-Wege-Schalters 422 gekoppelt ist. Der 2-Wege-Schalter hat den dritten Eingang 403 als zusätzlichen Eingang und den zweiten Ausgang 412 als Ausgang und den dritten Ausgang 413 ebenfalls als Ausgang.

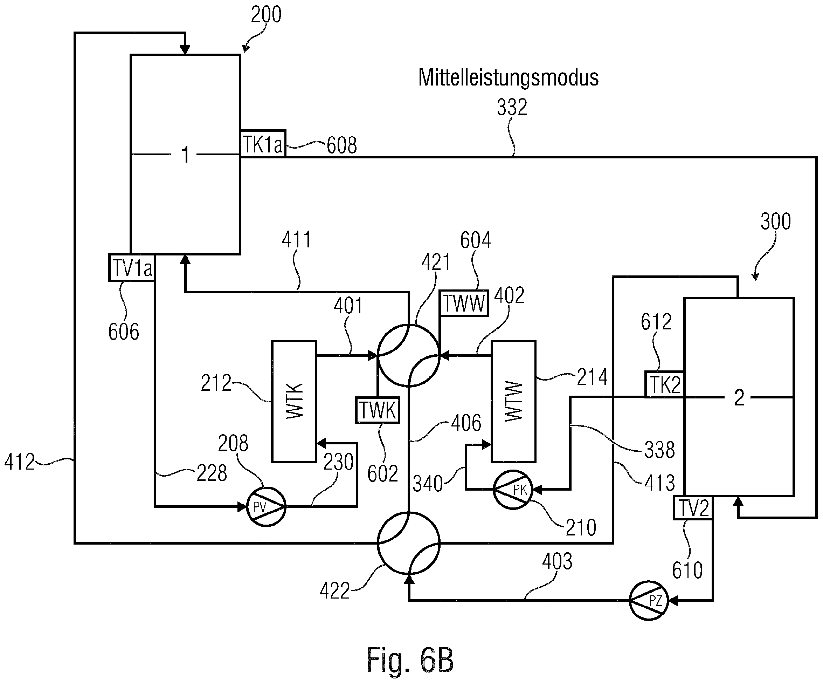

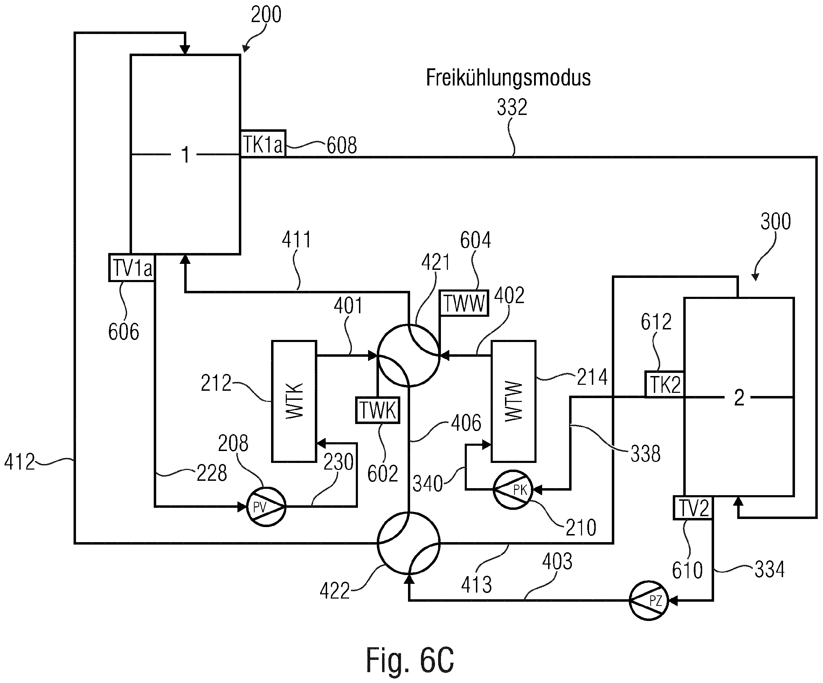

Die Stellungen der beiden 2x2-Wege-Schalter 421 sind in Fig. 7B tabellarisch dargestellt. Fig. 6A zeigt die beiden Stellungen der Schalter 421, 422 im Hochleistungsmodus (HLM). Dies entspricht der ersten Zeile in Fig. 7B. Fig. 6B zeigt die Stellung der beiden Schalter im Mittelleistungsmodus. Der obere Schalter 421 ist im Mittelleistungsmodus genau gleich wie im Hochleistungsmodus. Lediglich der untere Schalter 422 ist umgeschaltet worden. Im Freikühlungsmodus, der in Fig. 6C dargestellt ist, ist der untere Schalter gleich wie im Mittelleistungsmodus. Lediglich der obere Schalter ist umgeschaltet worden. Im Niederleistungsmodus schließlich ist der untere Schalter 422 im Vergleich zum Freikühlungsmodus umgeschaltet, während der obere Schalter im Niederleistungsmodus gleich seiner Stellung im Freikühlungsmodus ist. Damit wird sichergestellt, dass von einem benachbarten Modus zum nächsten Modus immer nur ein Schalter umgeschaltet werden muss, während der andere Schalter auf seiner Position verharren kann. Dies vereinfacht die gesamte Umschaltmaßnahme von einem Betriebsmodus zum nächsten.

Fig. 7A zeigt die Aktivitäten der einzelnen Verdichtermotoren und Pumpen in den verschiedenen Modi. In allen Modi sind die erste Pumpe 208 und die zweite Pumpe 210 aktiv. Die Zwischenkreispumpe ist in dem Hochleistungsmodus, dem Mittelleistungsmodus und dem Freikühlungsmodus aktiv, jedoch ist im Niederleistungsmodus deaktiviert.

Der Verdichtermotor 204 der ersten Stufe ist im Hochleistungsmodus, im Mittelleistungsmodus und im Freikühlungsmodus aktiv, und ist im Niederleistungsmodus deaktiviert. Darüber hinaus ist der Verdichtermotor der zweiten Stufe lediglich im Hochleistungsmodus aktiv, jedoch im Mittelleistungsmodus, im Freikühlungsmodus und im Niederleistungsmodus deaktiviert.

Es sei darauf hingewiesen, dass Fig. 4A den Niederleistungsmodus darstellt, in dem die beiden Motoren 204, 304 deaktiviert sind, und in dem auch die Zwischenkreispumpe 330 aktiviert ist. Dagegen zeigt Fig. 3B den gewissermaßen festgekoppelten Hochleistungsmodus, bei dem beide Motoren und alle Pumpen aktiv sind. Fig. 5 zeigt wiederum den Hochleistungsmodus, bei dem die Schalterstellungen so sind, dass genau die Konfiguration gemäß Fig. 3B erhalten wird.

Fig. 6A und 6C zeigen ferner verschiedene Temperatursensoren. Ein Sensor 602 misst die Temperatur am Ausgang des ersten Wärmetauschers 212, also am Rücklauf von der zu kühlenden Seite. Ein zweiter Sensor 604 misst die Temperatur am Rücklauf der zu wärmenden Seite, also vom zweiten Wärmetauscher 214. Ferner misst ein weiterer Temperatursensor 606 die Temperatur am Ausgang 220 des Verdampfers der ersten Stufe, wobei diese Temperatur typischerweise die kälteste Temperatur ist. Darüber hinaus ist ein weiterer Temperatursensor 608 vorgesehen, der die Temperatur in der Verbindungsleitung 332 misst, also am Ausgang des Kondensierers der ersten Stufe, der in anderen Figuren mit 224 bezeichnet ist. Darüber hinaus misst der Temperatursensor 610 die Temperatur am Ausgang des Verdampfers der zweiten Stufe 300, also am Ausgang 320 von Fig. 3B beispielsweise.

Schließlich misst der Temperatursensor 612 die Temperatur am Ausgang 324 des Verflüssigers 306 der zweiten Stufe 300, wobei diese Temperatur im Vollleistungsmodus die wärmste Temperatur im System ist.

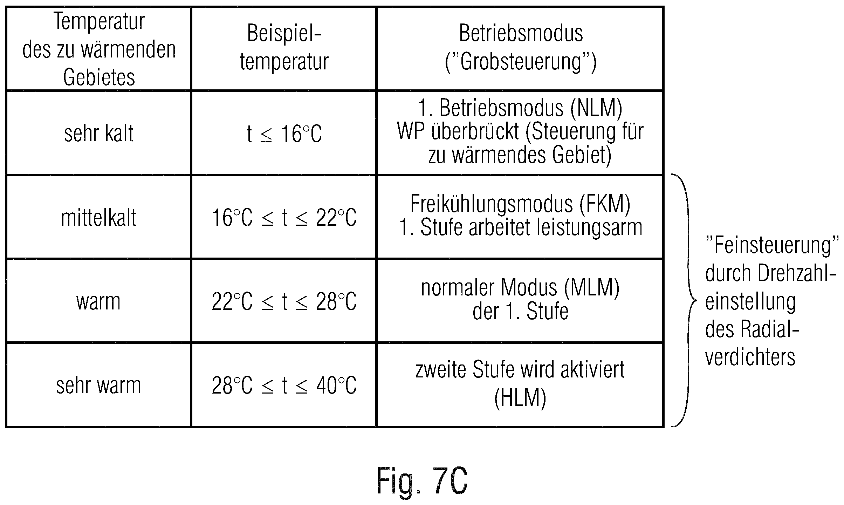

Nachfolgend wird Bezug nehmend auf die Fig. 7C und 7D auf die verschiedenen Stufen bzw. Betriebsmodi der Wärmepumpenanlage, wie sie beispielsweise anhand der Fig. 6A bis 6D dargestellt ist, und auch anhand der anderen Figuren dargestellt ist, eingegangen.

Die DE 10 2012 208 174 A1 offenbart eine Wärmepumpe mit einem Freikühlungsmodus. Im Freikühlungsmodus ist der Verdampfereinlass mit einem Rücklauf von dem zu wärmenden Gebiet verbunden. Ferner ist der Verflüssigereinlass mit einem Rücklauf von dem zu kühlenden Gebiet verbunden. Durch den Freikühlungsmodus wird bereits eine erhebliche Effizienzsteigerung erreicht, und zwar insbesondere für Außentemperaturen kleiner als z.B. 22 °C.

Dieser Freikühlungsmodus oder (FKM) ist in Zeile 453 in Fig. 4C dargestellt und ist insbesondere in Fig. 6C dargestellt. So ist insbesondere der Ausgang des kälteseitigen Wärmetauschers mit dem Eingang in den Kondensierer der ersten Stufe verbunden. Darüber hinaus ist der Ausgang aus dem wärmeseitigen Wärmetauscher 214 mit dem Verdampfereingang der ersten Stufe gekoppelt, und ist der Eingang in den wärmeseitigen Wärmetauscher 214 mit dem Kondensiererablauf der zweiten Stufe 300 verbunden. Die zweite Stufe ist jedoch deaktiviert, so das der Kondensiererablauf 338 von Fig. 6C beispielsweise dieselbe Temperatur wie der Kondensierereinlauf 413 hat. Darüber hinaus hat auch der Verdampferablauf 334 der zweiten Stufe dieselbe Temperatur wie der Kondensierereinlauf 413 der zweiten Stufe, so dass die zweite Stufe 300 thermodynamisch gewissermaßen "kurzgeschlossen" ist. Diese Stufe wird jedoch, obgleich der Verdichtermotor deaktiviert ist, von Arbeitsflüssigkeit durchströmt. Die zweite Stufe wird daher nach wie vor als Infrastruktur verwendet, ist jedoch aufgrund des abgeschalteten Verdichtermotors deaktiviert.

Soll nun z.B. vom Mittelleistungsmodus in den Hochleistungsmodus umgeschaltet werden, also von einem Modus, in dem die zweite Stufe deaktiviert ist und die erste Stufe aktiv ist, in einen Modus, in dem beide Stufen aktiv sind, so wird es bevorzugt, zunächst einmal den Verdichtermotor eine bestimmte Zeit, die beispielsweise größer als eine Minute ist und vorzugsweise 5 Minuten beträgt, laufenzulassen, bevor dann der Schalter 422 von der in Fig. 6B gezeigten Schalterstellung in die in Fig. 6A gezeigte Schalterstellung umgeschaltet wird.

Eine Wärmepumpe in der zweiten Wärmepumpenanordnung 102/114 umfasst einen Verdampfer mit einem Verdampfereinlass und einem Verdampferauslass sowie einen Verflüssiger mit einem Verflüssigereinlass und einem Verflüssigerauslass. Darüber hinaus ist eine Umschalteinrichtung vorgesehen, um die Wärmepumpe in einem Betriebsmodus oder einem anderen Betriebsmodus zu betreiben. In dem einen Betriebsmodus, dem Niederleistungsmodus wird die Wärmepumpe komplett überbrückt, dahingehend, dass der Rücklauf des zu kühlenden Gebietes direkt mit dem Hinlauf des zu wärmenden Gebietes verbunden wird. Darüber hinaus wird in diesem Überbrückungsmodus oder Niederleistungsmodus der Rücklauf des zu wärmenden Gebietes mit dem Hinlauf des zu kühlenden Gebietes verbunden. Typischerweise ist der Verdampfer dem zu kühlenden Gebiet zugeordnet und ist der Verflüssiger dem zu wärmenden Gebiet zugeordnet.

In dem Überbrückungsmodus wird der Verdampfer jedoch nicht mit dem zu kühlenden Gebiet verbunden und wird ferner auch der Verflüssiger nicht mit dem zu kühlenden Gebiet verbunden, sondern beide Gebiete werden gewissermaßen "kurzgeschlossen". In dem zweiten alternativen Betriebsmodus wird dagegen die Wärmepumpe nicht überbrückt, sondern, bei noch relativ niedrigen Temperaturen typischerweise im Freikühlungsmodus betrieben, oder aber im Normalmodus mit einer oder zwei Stufen. Im Freikühlungsmodus ist die Umschalteinrichtung ausgebildet, um einen Rücklauf des zu kühlenden Gebietes mit dem Verflüssigereinlass zu verbinden und um einen Rücklauf des wärmenden Gebietes mit dem Verdampfereinlass zu verbinden. Dagegen ist die Umschalteinrichtung im Normalmodus ausgebildet, um den Rücklauf des zu kühlenden Gebietes mit dem Verdampfereinlass zu verbinden und den Rücklauf des zu wärmenden Gebietes mit dem Verflüssigereinlass zu verbinden.

Je nach Ausführungsform kann am Ausgang der Wärmepumpe, also verflüssigerseitig, oder am Eingang der Wärmepumpe, also verdampferseitig, ein Wärmetauscher vorgesehen sein, um den inneren Wärmepumpenkreislauf von dem äußeren Kreislauf flüssigkeitsmäßig zu entkoppeln. In diesem Fall stellt der Verdampfereinlass den Einlass des Wärmetauschers dar, der mit dem Verdampfer gekoppelt ist. Darüber hinaus stellt in diesem Fall der Verdampferauslass den Auslass des Wärmetauchers dar, welcher wiederum mit dem Verdampfer festgekoppelt ist.

Analog hierzu ist auf Verflüssigerseite der Verflüssigerauslass ein Wärmetauscherauslass und ist der Verflüssigereinlass ein Wärmetauschereinlass, und zwar auf der Seite des Wärmetauschers, die nicht mit dem tatsächlichen Verflüssiger festgekoppelt ist.

Alternativ kann jedoch die Wärmepumpe ohne eingangsseitigen oder ausgangsseitigen Wärmetauscher betrieben werden. Dann könnte z.B. am Eingang in das zu kühlende Gebiet oder am Eingang in das zu wärmende Gebiet jeweils ein Wärmetauscher vorgesehen sein, welcher dann den Rücklauf bzw. Hinlauf zu dem kühlenden Gebiet oder zu dem zu wärmenden Gebiet umfasst.

Bei bevorzugten Ausführungsbeispielen wird die Wärmepumpe zum Kühlen eingesetzt, so dass das zu kühlende Gebiet beispielsweise ein in den Raum eines Gebäudes, ein Rechnerraum oder allgemein ein Kühlraum oder eine Supermarkteinrichtung ist, während das zu wärmende Gebiet z.B. ein Dach eines Gebäudes oder eine ähnliche Stelle ist, an der ein Wärmeabgabegerät platziert werden kann, um Wärme an die Umgebung abzugeben. Wird die Wärmepumpe jedoch alternativ hierzu zum Heizen verwendet, so ist das zu kühlende Gebiet die Umwelt, aus der Energie entzogen werden soll und das zu wärmende Gebiet die "Nutzanwendung", also beispielsweise das Innere eines Gebäudes, eines Hauses oder eines zu temperierenden Raumes.

Die Wärmepumpe ist somit in der Lage, von dem Überbrückungsmodus entweder in den Freikühlungsmodus oder, falls ein solcher Freikühlungsmodus nicht ausgebildet ist, in den Normalmodus umzuschalten.

Generell ist die Wärmepumpe dahingehend vorteilhaft, dass sie besonders effizient wird, wenn Außentemperaturen vorliegen, die z.B. kleiner als 16 °C sind, was zumindest in der nördlichen und südlichen Hemisphäre entfernet vom Äquator häufig der Fall ist.

Damit wird erreicht, dass zu Außentemperaturen, bei denen eine direkte Kühlung möglich ist, die Wärmepumpe komplett außer Betrieb genommen werden kann. Im Falle einer Wärmepumpe mit einem Radialkompressor zwischen dem Verdampfer und dem Verflüssiger kann das Radialrad gestoppt werden, und es muss in die Wärmepumpe keine Energie mehr gesteckt werden. Alternativ kann die Wärmepumpe jedoch noch in einem Bereitschaftsmodus oder etwas Ähnlichem laufen, der jedoch, da er nur ein Bereitschaftsmodus ist, nur einen geringen Stromverbrauch mit sich bringt. Insbesondere bei ventillosen Wärmepumpen, wie sie vorzugsweise eingesetzt werden, kann durch komplette Überbrückung der Wärmepumpe im Gegensatz zum Freikühlungsmodus ein Wärmekurzschluss vermieden werden.

Darüber hinaus wird es bevorzugt, dass die Umschalteinrichtung im ersten Betriebsmodus, also im Niederleistungs- oder Überbrückungsmodus den Rücklauf des zu kühlenden Gebietes oder den Hinlauf des zu kühlenden Gebietes von dem Verdampfer komplett trennt, so dass keine Flüssigkeitsverbindung zwischen dem Einlass bzw. Auslass des Verdampfers und dem zu kühlenden Gebiet mehr existiert. Diese komplette Trennung wird ebenfalls auf der Verflüssigerseite vorteilhaft sein.

Bei Implementierungen ist eine Temperatursensoreinrichtung vorgesehen, die eine erste Temperatur bezüglich des Verdampfers oder eine zweite Temperatur bezüglich des Verflüssigers erfasst. Ferner hat die Wärmepumpe eine Steuerung, die mit der Temperatursensoreinrichtung gekoppelt ist und ausgebildet ist, um abhängig von einer oder mehreren in der Wärmepumpe erfassten Temperaturen die Umschalteinrichtung zu steuern, so dass die Umschalteinrichtung von dem ersten in den zweiten Betriebsmodus oder umgekehrt umschaltet. Die Implementierung der Umschalteinrichtung kann durch einen Eingangs-Schalter und einen Ausgangs-Schalter implementiert werden, welche jeweils vier Eingänge und vier Ausgänge aufweisen und je nach Modus schaltbar sind. Alternativ kann die Umschalteinrichtung jedoch auch durch mehrere einzelne kaskadiert angeordnete Umschalter implementiert werden, die jeweils einen Eingang und zwei Ausgänge aufweisen.

Ferner kann als Kopplungselement zum Koppeln der Überbrückungsleitung mit dem Hinlauf in das zu wärmende Gebiet oder der Koppler zum Koppeln der Überbrückungsleitung mit dem Hinlauf in das zu kühlende Gebiet als einfache Drei-Anschluss-Kombination ausgebildet sein, also als ein Flüssigkeitsaddierer. Bei Implementierungen wird jedoch bevorzugt, um eine optimale Entkopplung zu haben, die Koppler ebenfalls als Umschalter bzw. in dem Eingangs-Schalter bzw. Ausgangs-Schalter integriert auszuführen.

Darüber hinaus wird als spezieller Temperatursensor ein erster Temperatursensor auf Verdampferseite verwendet und wird als zweiter Temperatursensor ein zweiter Temperatursensor auf Verflüssigerseite verwendet, wobei eine umso direktere Messung bevorzugt wird. Die verdampferseitige Messung wird insbesondere dazu verwendet, um eine Drehzahlsteuerung des Temperaturanhebers also z.B. eines Kompressors der ersten und/oder zweiten Stufe, vorzunehmen, während die verflüssigerseitige Messung oder aber auch eine Umgebungstemperaturmessung eingesetzt wird, um eine Modussteuerung durchzuführen, also um die Wärmepumpe z.B. von dem Überbrückungsmodus in den Freikühlungsmodus umzuschalten, wenn eine Temperatur nicht mehr im sehr kalten Temperaturbereich liegt, sondern im mittelkalten Temperaturbereich. Liegt die Temperatur jedoch weiter oben, also in einem warmen Temperaturbereich, so wird die Umschalteinrichtung die Wärmepumpe in einen Normalmodus mit erste aktiver Stufe oder mit zwei aktiven Stufen bringen.

Bei einer zweistufigen Wärmepumpe wird bei diesem Normalmodus, der dem Mittelleistungsmodus entspricht, jedoch lediglich eine erste Stufe aktiv sein, während die zweite Stufe noch inaktiv ist, also nicht mit Strom versorgt wird und daher keine Energie benötigt. Erst wenn die Temperatur weiter ansteigt, und zwar in einen sehr warmen Bereich, dann wird zusätzlich zur ersten Wärmepumpenstufe bzw. zusätzlich zur ersten Druckstufe eine zweite Druckstufe aktiviert, welche wiederum einen Verdampfer, einen Temperaturanheber typischerweise in Form eines Radialkompressors und einen Verflüssiger aufweist. Die zweite Druckstufe kann seriell oder parallel oder seriell/parallel mit der ersten Druckstufe verschaltet sein.

Um sicherzustellen, dass im Überbrückungsmodus, also wenn die Außentemperaturen bereits relativ kalt sind, die Kälte von außen nicht komplett in das Wärmepumpensystem und darüber hinaus in den zu kühlenden Raum eindringt, also den zu kühlenden Raum noch kälter macht, als er eigentlich sein sollte, wird es bevorzugt, anhand eines Sensorsignals am Hinlauf in das zu kühlende Gebiet oder am Rücklauf des zu kühlenden Gebiets ein Steuersignal zu liefern, das von einem außerhalb der Wärmepumpe angebrachten Wärmeabgabegerät verwendet werden kann, um die Wärmeabgabe zu steuern, d.h. dann, wenn die Temperaturen zu kalt werden, zu reduzieren. Das Wärmeabgabegerät ist beispielsweise ein Flüssigkeits/Luft-Wärmetauscher, mit einer Pumpe zum Umwälzen der in das zu wärmende Gebiet gebrachten Flüssigkeit. Ferner kann das Wärmeabgabegerät einen Ventilator aufweisen, um Luft in den Luftwärmetauscher zu transportieren. Zusätzlich oder alternativ kann auch ein Drei-Wege-Mischer vorgesehen sein, um den Luftwärmetauscher teilweise oder ganz kurzzuschließen. Abhängig von dem Hinlauf in das zu kühlende Gebiet, der in diesem Überbrückungsmodus jedoch nicht mit dem Verdampferauslass, sondern mit dem Rücklauf aus dem zu wärmenden Gebiet verbunden ist, wird das Wärmeabgabegerät, also beispielsweise die Pumpe, der Ventilator oder der Drei-Wege-Mischer gesteuert, um die Wärmeabgabe immer weiter zu reduzieren, damit ein Temperaturniveau beibehalten wird, und zwar in dem Wärmepumpensystem und in dem zu kühlenden Bereich, das in diesem Fall oberhalb des Außentemperaturniveaus liegen kann. Damit kann die Abwärme sogar zum Heizen des "zu kühlenden" Raums verwendet werden, wenn die Außentemperaturen zu kalt sind.

Bei einem weiteren Aspekt wird eine gesamte Steuerung der Wärmepumpe so vorgenommen, dass abhängig von einem Temperatursensorausgangssignal eines Temperatursensors auf Verdampferseite eine "Feinsteuerung" der Wärmepumpe vorgenommen wird, also eine Drehzahlsteuerung in den verschiedenen Modi, also z.B. dem Freikühlungsmodus, dem Normalmodus mit erster Stufe und dem Normalmodus mit zweiter Stufe und auch eine Steuerung des Wärmeabgabegeräts im Überbrückungsmodus, während eine Modusumschaltung anhand eines Temperatursensorausgangssignals eines Temperatursensors auf Verflüssigerseite als Grobsteuerung vorgenommen wird. Damit wird also lediglich aufgrund eines verflüssigerseitigen Temperatursensors eine Betriebsmodusumschaltung vom Überbrückungsmodus (oder NLM) in den Freikühlungsmodus (oder FKM) und/oder in den Normalmodus (MLM oder HLM) vorgenommen, wobei zur Entscheidung, ob eine Umschaltung stattfindet, das verdampferseitige Temperaturausgangssignal nicht genommen wird. Allerdings wird für die Drehzahlsteuerung des Radialverdichters bzw. für die Steuerung der Wärmeabgabegeräte wiederum lediglich das verdampferseitige Temperaturausgangssignal verwendet, nicht jedoch das verflüssigerseitige Sensorausgangssignal.

Es sei darauf hingewiesen, dass die verschiedenen Aspekte der vorliegenden Erfindung bezüglich der Anordnung und der Zweistufigkeit, sowie bezüglich der Verwendung des Überbrückungsmodus, der Ansteuerung des Wärmeabgabegeräts in dem Überbrückungsmodus oder Freikühlungsmodus und die Ansteuerung des Radialverdichters in dem Freikühlungsmodus oder dem normalen Betriebsmodus oder bezüglich der Verwendung von zwei Sensoren, wobei ein Sensor zur Betriebsmodusumschaltung und der andere Sensor zur Feinsteuerung eingesetzt wird, unabhängig voneinander eingesetzt werden können. Allerdings können diese Aspekte jedoch auch in Paaren, oder in größeren Gruppen oder auch zusammen kombiniert werden.

Fig. 7A bis 7D zeigen eine Übersicht über verschiedene Modi, in der die Wärmepumpe gemäß Fig. 1, Fig. 2, Fig. 8A, 9A betreibbar ist. Ist die Temperatur des zu wärmenden Gebietes sehr kalt, wie beispielsweise kleiner als 16 °C, so wird die Betriebsmodusauswahl den ersten Betriebsmodus aktivieren, in dem die Wärmepumpe überbrückt ist und das Steuersignal 36b für das Wärmeabgabegerät im zu wärmenden Gebiet 16 erzeugt wird. Ist die Temperatur des zu wärmenden Gebietes, also des Gebietes 16 von Fig. 1 in einem mittelkalten Temperaturbereich, also z.B. in einem Bereich zwischen 16 °C und 22 °C, so wird die Betriebsmodussteuerung den Freikühlungsmodus aktivieren, in dem aufgrund der geringen Temperaturspreizung die erste Stufe der Wärmepumpe leistungsarm arbeiten kann. Befindet sich jedoch die Temperatur des zu wärmenden Gebietes in einem warmen Temperaturbereich, also beispielsweise zwischen 22 °C und 28 °C, so wird die Wärmepumpe in dem normalen Modus betrieben, jedoch in dem Normalmodus mit einer ersten Wärmepumpenstufe. Wird dagegen die Außentemperatur sehr warm sein, also in einem Temperaturbereich zwischen 28 °C und 40 °C, so wird eine zweite Wärmepumpenstufe aktiviert, die ebenfalls im Normalmodus arbeitet und die bereits laufend die erste Stufe unterstützt.

Vorzugsweise wird eine Drehzahlsteuerung bzw. "Feinsteuerung" eines Radialverdichters innerhalb des Temperaturanhebers 34 von Fig. 1 in den Temperaturbereichen "mittelkalt", "warm", "sehr warm" vorgenommen, um die Wärmepumpe immer nur mit der Wärme/Kälteleistung zu betreiben, die von den tatsächlichen Voraussetzungen gerade gefordert wird.

Vorzugsweise wird die Modusumschaltung von einem verflüssigerseitigen Temperatursensor gesteuert, während die Feinsteuerung bzw. das Steuersignal für den ersten Betriebsmodus von einer verdampferseitigen Temperatur abhängt.

Es sei darauf hingewiesen, dass die Temperaturbereiche "sehr kalt", "mittelkalt", "warm", "sehr warm" für verschiedene Temperaturbereiche stehen, deren jeweils mittlere Temperatur von sehr kalt zu mittelkalt, zu warm, zu sehr warm jeweils größer wird. Die Bereiche können, wie es anhand von Fig. 7C dargestellt worden ist, direkt aneinander angrenzen. In Ausführungsformen können die Bereiche jedoch auch überlappen und auf dem genannten Temperaturniveau oder einem anderen insgesamt höheren oder niedrigeren Temperaturniveau liegen. Ferner wird die Wärmepumpe vorzugsweise mit Wasser als Arbeitsmittel betrieben. Je nach Anforderung können jedoch auch andere Mittel eingesetzt werden.

Dies ist in Fig. 7D tabellarisch dargestellt. Ist die Verflüssigertemperatur in einem sehr kalten Temperaturbereich, wird als Reaktion von der Steuerung 430 der erste Betriebsmodus eingestellt. Wird in diesem Modus festgestellt, dass die Verdampfertemperatur kleiner als eine Soll-Temperatur ist, wird durch ein Steuersignal beim Wärmeabgabegerät eine Reduktion der Wärmeabgabe erreicht. Ist die Verflüssigertemperatur jedoch im mittelkalten Bereich, so ist als Reaktion darauf eine Umschaltung in den Freikühlungsmodus von der Steuerung 430 zu erwarten, wie es durch die Leitungen 431 und 434 dargestellt ist. Ist hier die Verdampfertemperatur größer als eine Soll-Temperatur, so führt dies in Reaktion zu einer Erhöhung der Drehzahl des Radialverdichters des Kompressors über die Steuerleitung 434. Wird wiederum festgestellt, dass die Verflüssigertemperatur in einem warmen Temperaturbereich ist, so wird als Reaktion hierauf die erste Stufe in den Normalbetrieb genommen, was durch ein Signal auf der Leitung 434 geschieht. Wird wiederum festgestellt, dass bei einer bestimmten Drehzahl des Kompressors dennoch die Verdampfertemperatur größer als eine Soll-Temperatur ist, dann führt dies zu einer Erhöhung der Drehzahl der ersten Stufe wieder über das Steuersignal auf der Leitung 434. Wird schließlich festgestellt, dass die Verflüssigertemperatur in einem sehr warmen Temperaturbereich ist, so wird als Reaktion hierauf eine zweite Stufe im Normalbetrieb zugeschaltet, was wiederum durch ein Signal auf der Leitung 434 geschieht. Je nachdem, ob die Verdampfertemperatur größer oder kleiner als eine Soll-Temperatur ist, wie es durch Signale auf der Leitung 432 signalisiert wird, wird dann eine Steuerung der ersten und/oder der zweiten Stufe vorgenommen, um auf eine veränderte Situation zu reagieren.

Somit wird eine transparente und effiziente Steuerung erreicht wird, die zum einen eine "Grobabstimmung" aufgrund der Modusumschaltung und zum anderen eine "Feinabstimmung" aufgrund der temperaturabhängigen Drehzahleinstellung erreicht, dahingehend, dass immer nur so viel Energie verbraucht werden muss, wie gerade tatsächlich benötigt wird. Diese Vorgehensweise, bei der es auch nicht zu ständigen An- Abschaltungen in einer Wärmepumpe kommt, wie beispielsweise bei bekannten Wärmepumpen mit Hysterese stellt auch sicher, dass aufgrund des kontinuierlichen Betriebs keine Anlaufverluste entstehen.

Vorzugsweise wird eine Drehzahlsteuerung bzw. "Feinsteuerung" eines Radialverdichters innerhalb des Verdichtermotors von Fig. 1 in den Temperaturbereichen "mittelkalt", "warm", "sehr warm" vorgenommen, um die Wärmepumpe immer nur mit der Wärme/Kälteleistung zu betreiben, die von den tatsächlichen Voraussetzungen gerade gefordert wird.

Vorzugsweise wird die Modusumschaltung von einem verflüssigerseitigen Temperatursensor gesteuert, während die Feinsteuerung bzw. das Steuersignal für den ersten Betriebsmodus von einer verdampferseitigen Temperatur abhängt.

Bei einer Modusumschaltung ist die Steuerung 430 ausgebildet ist, um eine Bedingung für einen Übergang von dem Mittelleistungsmodus zu dem Hochleistungsmodul zu erfassen. Dann wird der Verdichter 304 in der weiteren Wärmepumpenstufe 300 gestartet. Erst nach Versteichen einer vorbestimmten Zeit, die größer als eine Minute ist und vorzugsweise sogar größer als vier oder sogar fünf Minuten ist, wird das steuerbare Wegemodul von dem Mittelleistungsmodus zu dem Hochleistungsmodus umzuschalten. Damit wird erreicht, dass einfach aus dem Stand umgeschaltet werden kann, wobei das Laufenlassen des Verdichtermotors vor der Umschaltung sicherstellt, dass der Druck im Verdampfer kleiner wird als der Druck im Verdichter.

Es sei darauf hingewiesen, dass die Temperaturbereiche in Fig. 7C variiert werden können. Insbesondere sind die Schwellentemperaturen, zwischen einer sehr kalten Temperatur und einer mittelkalten Temperatur, also der Wert 16 °C in Fig. 7C sowie zwischen der mittelkalten Temperatur und der warmen Temperatur, also der Wert 22 °C in Fig. 7C und der Wert zwischen der warmen und der sehr warmen Temperatur, also der Wert 28 °C in Fig. 7C lediglich beispielhaft. Vorzugsweise ist die Schwellentemperatur zwischen warm und sehr warm, in der eine Umschaltung vom Mittelleistungsmodus zum Hochleistungsmodus stattfindet, zwischen 25 und 30 °C. Ferner ist die Schwellentemperatur zwischen warm und mittelkalt, wenn also zwischen dem Freikühlungsmodus und dem Mittelleistungsmodus umgeschaltet wird, in einem Temperaturbereich zwischen 18 und 24 °C. Schließlich ist die Schwellentemperatur, bei der zwischen dem mittelkalten Modus und dem sehr kalten Modus umgeschaltet wird, in einem Bereich zwischen 12 und 20 °C, wobei die Werte vorzugsweise so gewählt sind, wie sie in der Tabelle in Fig. 7C gezeigt sind, jedoch, wie gesagt, in den genannten Bereichen unterschiedlich eingestellt werden können.

Je nach Implementierung und Anforderungsprofil kann die Wärmepumpenanlage jedoch auch in vier Betriebsmodi betrieben werden, die sich ebenfalls unterscheiden, jedoch alle auf einem anderen absoluten Niveau sind, so dass die Bezeichnungen "sehr kalt", "mittelkalt", "warm", "sehr warm" lediglich relativ zueinander zu verstehen sind, jedoch keine absoluten Temperaturwerte darstellen sollen.

Obgleich bestimmte Elemente als Vorrichtungselemente beschrieben sind, sei darauf hingewiesen, dass diese Beschreibung gleichermaßen als Beschreibung von Schritten eines Verfahrens und umgekehrt anzusehen ist. So stellen beispielsweise die in den Fig. 6A bis 6D beschriebenen Blockschaltbilder gleichermaßen Flussdiagramme eines entsprechenden erfindungsgemäßen Verfahrens dar.

Ferner sei darauf hingewiesen, dass die Steuerung beispielsweise durch das Element 430 in Fig. 4B als Software oder Hardware implementiert werden kann, wobei dies auch für die Tabellen in den Fig. 4C, 4D, oder 7A, 7B, 7C, 7D gilt. Die Implementierung der Steuerung kann auf einem nicht-flüchtigen Speichermedium, einem digitalen oder anderen Speichermedium, insbesondere einer Diskette oder CD mit elektronisch auslesbaren Steuersignalen erfolgen, die so mit einem programmbaren Computersystem zusammenwirken können, dass das entsprechende Verfahren zum Pumpen von Wärme bzw. zum Betreiben einer Wärmepumpe ausgeführt wird. Allgemein umfasst die Erfindung somit auch ein Computer-Programm-Produkt mit einem auf einem maschinenlesbaren Träger gespeicherten Programmcode zur Durchführung des Verfahrens, wenn das Computer-Programm-Produkt auf einem Rechner abläuft. In anderen Worten ausgedrückt, kann die Erfindung somit auch als ein Computer-Programm mit einem Programmcode zur Durchführung des Verfahrens realisiert werden, wenn das Computer-Programm auf einem Computer abläuft.

## Patentansprüche

1. Wärmepumpensystem, mit folgenden Merkmalen:
einer ersten Wärmepumpenanordnung (101, 111), die ausgebildet ist, um mit einem ersten Wärmepumpenmedium zu arbeiten, das CO2 aufweist;
einer zweiten Wärmepumpenanordnung (102, 114), die ausgebildet ist, um mit einem zweiten Wärmepumpenmedium zu arbeiten, das Wasser aufweist, wobei die zweite Wärmepumpenanordnung einen Eingangsabschnitt (114a), einen Verdampfer (120, 202), einen Verflüssiger (122, 306) und einen Ausgangsabschnitt (114b) aufweist, wobei der Eingangsabschnitt (114a) mit dem Verdampfer (120, 202) der zweiten Wärmepumpenanordnung (102, 114) gekoppelt ist, und wobei der Ausgangsabschnitt (114b) mit dem Verflüssiger (122, 306) der zweiten Wärmepumpenanordnung gekoppelt ist,
wobei die zweite Wärmepumpenanordnung (102, 114) eine Steuerung (124) aufweist, die ausgebildet ist, um abhängig von einer Temperatur (124a, 124b) an dem Eingangsabschnitt (114a) oder einer Temperatur (124c, 124d) an dem Ausgangsabschnitt (114b) so zu steuern, dass eine Aufnahme von elektrischer Leistung durch die zweite Wärmepumpenanordnung (102, 114) bei einer zunehmenden Temperatur (124a, 124b, 124c, 124d) an dem Eingangsabschnitt (114a) oder dem Ausgangsabschnitt (114b) zunimmt und bei einer abnehmenden Temperatur (124a-124d) an dem Eingangsabschnitt (114a) oder dem Ausgangsabschnitt (114b) abnimmt, und wobei die zweite Wärmepumpenanordnung (102,114) einen Turboverdichter (121) mit einem Radialrad aufweist, wobei eine Drehzahl des Radialrads abhängig von der Temperatur (124a-124d) an dem Eingangsabschnitt (114a) oder der Temperatur an dem Ausgangsabschnitt (114b) steuerbar ist; und
einem Koppler (103) zum thermischen Koppeln der ersten Wärmepumpenanordnung (101, 111) mit der zweiten Wärmepumpenanordnung (102, 114),
wobei der Koppler (103, 115) einen ersten Wärmetauscher (115a) aufweist, der eine Primärseite und eine Sekundärseite hat, wobei die Sekundärseite des ersten Wärmetauschers (115a) über den Eingangsabschnitt (114a) mit dem Verdampfer (120, 202, 320) der zweiten Wärmepumpenanordnung gekoppelt ist, und wobei die Primärseite des ersten Wärmetauschers (115a) mit der ersten Wärmepumpenanordnung (111) gekoppelt ist, und
wobei der Koppler (103, 115) einen zweiten Wärmetauscher (115b) aufweist, der eine Primärseite und eine Sekundärseite hat, wobei die Sekundärseite des zweiten Wärmetauschers (115b) über den Ausgangsabschnitt (114b) mit dem Verflüssiger (122, 206, 306) der zweiten Wärmepumpenanordnung (102, 114) gekoppelt ist, und wobei die Primärseite des zweiten Wärmetauschers mit der ersten Wärmpumpenanordnung (101, 111) gekoppelt ist.

2. Wärmepumpensystem nach Anspruch 1, das ferner einen Rückkühler (131) aufweist, der ausgebildet ist, um mit einer Umgebung gekoppelt zu werden, wobei der Ausgangsabschnitt (114b) der zweiten Wärmepumpenanordnung (102, 114) mit dem Rückkühler (131) gekoppelt ist.

3. Wärmepumpensystem nach Anspruch 2, bei der der Ausgangsabschnitt (114b) einen Wärmetauscher (130) aufweist, durch den ein Rückkühlerkreislauf von der zweiten Wärmepumpenanordnung (102, 114) fluidisch getrennt ist, wobei der Rückkühlerkreislauf ausgebildet ist, um bei einem Druck zu arbeiten, der höher ist als ein Druck in der zweiten Wärmepumpenanordnung, und der kleiner ist als ein Druck in der ersten Wärmepumpenanordnung (101, 111).

4. Wärmepumpensystem nach Anspruch 2 oder 3, bei dem der Rückkühler (131) einen Flüssigkeitskreislauf aufweist, der ausgebildet ist, um ein Wasser/Glykol-Gemisch oder Wasser zu führen, oder
bei dem die erste Wärmepumpenanordnung (101, 111) einen Verdichter (112) aufweist, wobei der Koppler (103, 115) derart ausgebildet ist, dass die Primärseite des ersten Wärmetauschers (115a) oder des zweiten Wärmetauschers (115b) mit einem Verdichterausgang (113, 112) der ersten Wärmepumpenanordnung (101, 111) verbunden ist.

5. Wärmepumpensystem nach einem der Ansprüche 1 bis 3, bei dem die erste Wärmepumpenanordnung (101, 111) einen Verdichter (112) aufweist, wobei der zweite Wärmetauscher (115b) mit dem Verdichter (112) der ersten Wärmepumpenanordnung (101, 111) gekoppelt ist, und wobei der erste Wärmetauscher (115a) mit dem zweiten Wärmetauscher (115b) über eine Verbindungsleitung (115c) gekoppelt ist.

6. Wärmepumpensystem nach Anspruch 5,
bei dem die Primärseite des ersten Wärmetauschers (115a) einen ersten Primäreingang (115c) und einen ersten Primärausgang (132) aufweist,
bei dem die Sekundärseite des ersten Wärmetauschers (115a) einen ersten Sekundäreingang (120b) und einen ersten Sekundärausgang (120a) aufweist,
bei dem die Primärseite des zweiten Wärmetauschers (115b) einen zweiten Primäreingang (113) und einen zweiten Primärausgang (115c) aufweist,
bei dem die Sekundärseite des zweiten Wärmetauschers (115b) einen zweiten Sekundärausgang (131a) und einen zweiten Sekundäreingang (134) aufweist,
wobei der zweite Primäreingang (113) mit einem Verdichterausgang der ersten Wärmepumpenanordnung verbunden ist,
wobei der zweite Primärausgang über eine Verbindungsleitung (115c) mit dem ersten Primäreingang des ersten Wärmetauscher (115a) verbunden ist, und
wobei der erste Primärausgang (132) des ersten Wärmetauscher (115a) mit einer Stelle des ersten Wärmepumpensystems (100, 111) thermisch gekoppelt ist, die sich von dem Verdichterausgang unterscheidet.

7. Wärmepumpensystem nach Anspruch 6, bei dem die Stelle des ersten Wärmepumpensystems, mit der der erste Primärausgang (132) des ersten Wärmetauscher (115a) gekoppelt ist, ein Verdampfereingang eines Verdampfers (116) der ersten Wärmepumpenanordnung oder ein Drosseleingang einer Drossel (117) der ersten Wärmepumpenanordnung (101, 111) ist.

8. Wärmepumpensystem nach Anspruch 6 oder 7,
bei dem der erste Sekundäreingang (120b) oder der erste Sekundärausgang (120a) mit einem Eingangsabschnitt (230, 401) oder dem Verdampfer (120, 102) der zweiten Wärmepumpenanordnung (114) verbunden ist.

9. Wärmepumpensystem nach einem der Ansprüche 6 bis 8,
bei dem der zweite Sekundäreingang (134) über den Ausgangsabschnitt (114b, 402, 340, 214) der zweiten Wärmepumpenanordnung mit dem Verflüssiger (122) der zweiten Wärmepumpenanordnung verbunden ist, oder
bei dem der zweite Sekundärausgang (131a) mit einem Rückkühler (131) verbunden ist.

10. Wärmepumpensystem nach einem der Ansprüche 6 bis 9,
das einen Rückkühler (131) aufweist, wobei der Ausgangsabschnitt (114b, 402, 340, 214) der zweiten Wärmepumpenanordnung einen Ausgangs-Wärmetauscher (130, 214) aufweist, dessen Primärseite mit dem Rückkühler (131) gekoppelt ist, und dessen Sekundärseite mit dem Verflüssiger (306) über den Ausgangsabschnitt (402, 340) der zweiten Wärmepumpenanordnung gekoppelt ist.

11. Wärmepumpensystem nach Anspruch 1,
bei dem ein Zusammenhang zwischen einer Aufnahme der elektrischen Leistung und der Temperatur (100a-124d) an dem Eingangsabschnitt (114a) oder dem Ausgangsabschnitt (114b) zumindest in einem Betriebsmodus der zweiten Wärmepumpenanordnung (102, 114) annähernd linear ist.

12. Wärmepumpensystem nach einem der vorhergehenden Ansprüche, bei dem die zweite Wärmepumpenanordnung (102, 114) folgende Merkmale aufweist:
eine Wärmepumpenstufe (200) mit einem ersten Verdampfer (202), einem ersten Verflüssiger (206) und einem ersten Verdichter (204); und
eine weitere Wärmepumpenstufe (300) mit einem zweiten Verdampfer (302), einem zweiten Verflüssiger (306) und einem zweiten Verdichter (304),
wobei ein erster Verflüssigerausgang (224) des ersten Verflüssigers (206) mit einem zweiten Verdampfereingang (322) des zweiten Verdampfers (302) über eine Verbindungsleitung (332) verbunden ist.

13. Wärmepumpensystem nach Anspruch 12, bei der die zweite Wärmepumpenanordnung ferner ein steuerbares Wegemodul aufweist, um die Wärmepumpenanordnung und das steuerbare Wegemodul (420) anzusteuern, um die zweite Wärmepumpenanordnung in einem von wenigsten zwei unterschiedlichen Modi zu betreiben, wobei die zweite Wärmepumpenanordnung ausgebildet ist, um wenigstens zwei Modi auszuführen, die aus einer Gruppe von Modi ausgewählt sind, die folgende Modi aufweist:
einen Hochleistungsmodus, in dem die Wärmepumpenstufe (100) und die weitere Wärmepumpenstufe (200) aktiv sind;
einen Mittelleistungsmodus, in dem die Wärmepumpenstufe (200) aktiv ist und die weitere Wärmepumpenstufe (300) inaktiv ist;
einen Freikühlungsmodus, in dem die Wärmepumpenstufe (200) aktiv ist und die weitere Wärmepumpenstufe (300) inaktiv ist und der zweite Wärmetauscher (214) mit einem Verdampfereinlass (222) der Wärmepumpenstufe (200) gekoppelt ist; und
einen Niederleistungsmodus, in dem die Wärmepumpenstufe (200) und die weitere Wärmepumpenstufe (300) inaktiv sind,
wobei die Steuerung ausgebildet ist, um eine Bedingung für einen Übergang von dem Mittelleistungsmodus zu dem Hochleistungsmodul zu erfassen, um den Verdichter (304) in der weiteren Wärmepumpenstufe (300) zu starten, und um erst nach Verstreichen einer vorbestimmten Zeit, die größer als eine Minute ist, das steuerbare Wegemodul von dem Mittelleistungsmodus zu dem Hochleistungsmodus umzuschalten.

14. Verfahren zum Herstellen eines Wärmepumpensystems mit einer ersten Wärmepumpenanordnung einer ersten Wärmepumpenanordnung (101, 111), die ausgebildet ist, um mit einem ersten Wärmepumpenmedium zu arbeiten, das CO2 aufweist, und mit einer zweiten Wärmepumpenanordnung (102, 114), die ausgebildet ist, um mit einem zweiten Wärmepumpenmedium zu arbeiten, das Wasser aufweist, wobei die zweite Wärmepumpenanordnung einen Eingangsabschnitt (114a), einen Verdampfer (120, 202), einen Verflüssiger (122, 306) und einen Ausgangsabschnitt (114b) aufweist, wobei der Eingangsabschnitt (114a) mit dem Verdampfer (120, 202) der zweiten Wärmepumpenanordnung (102, 114) gekoppelt ist, und wobei der Ausgangsabschnitt (114b) mit dem Verflüssiger (122, 306) der zweiten Wärmepumpenanordnung gekoppelt ist, wobei die zweite Wärmepumpenanordnung (102, 114) eine Steuerung (124) aufweist, die ausgebildet ist, um abhängig von einer Temperatur (124a, 124b) an dem Eingangsabschnitt (114a) oder einer Temperatur (124c, 124d) an dem Ausgangsabschnitt (114b) so zu steuern, dass eine Aufnahme von elektrischer Leistung durch die zweite Wärmepumpenanordnung (102, 114) bei einer zunehmenden Temperatur (124a, 124b, 124c, 124d) an dem Eingangsabschnitt (114a) oder dem Ausgangsabschnitt (114b) zunimmt und bei einer abnehmenden Temperatur (124a-124d) an dem Eingangsabschnitt (114a) oder dem Ausgangsabschnitt (114b) abnimmt, und wobei die zweite Wärmepumpenanordnung einen Turboverdichter (121) mit einem Radialrad aufweist, wobei eine Drehzahl des Radialrads abhängig von der Temperatur (124a-124d) an dem Eingangsabschnitt (114a) oder der Temperatur an dem Ausgangsabschnitt (114b) steuerbar ist, mit folgendem Schritt:
thermisches Koppeln der ersten Wärmepumpenanordnung und der zweiten Wärmepumpenanordnung mit einem Koppler (103, 115), wobei der Koppler (103, 115) einen ersten Wärmetauscher (115a) aufweist, der eine Primärseite und eine Sekundärseite hat, wobei die Sekundärseite des ersten Wärmetauschers (115a) über den Eingangsabschnitt (114a) mit dem Verdampfer (120, 202, 320) der zweiten Wärmepumpenanordnung gekoppelt ist, und wobei die Primärseite des ersten Wärmetauschers (115a) mit der ersten Wärmepumpenanordnung (111) gekoppelt ist, und wobei der Koppler (103, 115) einen zweiten Wärmetauscher (115b) aufweist, der eine Primärseite und eine Sekundärseite hat, wobei die Sekundärseite des zweiten Wärmetauschers (115b) über den Ausgangsabschnitt (114b) mit dem Verflüssiger (122, 206, 306) der zweiten Wärmepumpenanordnung (102, 114) gekoppelt ist, und wobei die Primärseite des zweiten Wärmetauschers mit der ersten Wärmpumpenanordnung (101, 111) gekoppelt ist.

15. Verfahren zum Betreiben eines Wärmepumpensystems, mit folgenden Schritten:
Betreiben einer ersten Wärmepumpenanordnung (101, 111) mit einem ersten Wärmepumpenmedium, das CO2 aufweist;
Betreiben einer zweiten Wärmepumpenanordnung (102, 114) mit einem zweiten Wärmepumpenmedium, das Wasser aufweist, wobei die zweite Wärmepumpenanordnung einen Eingangsabschnitt (114a), einen Verdampfer (120, 202), einen Verflüssiger (122, 306) und einen Ausgangsabschnitt (114b) aufweist, wobei der Eingangsabschnitt (114a) mit dem Verdampfer (120, 202) der zweiten Wärmepumpenanordnung (102, 114) gekoppelt ist, und wobei der Ausgangsabschnitt (114b) mit dem Verflüssiger (122, 306) der zweiten Wärmepumpenanordnung gekoppelt ist, wobei die zweite Wärmepumpenanordnung einen Turboverdichter (121) mit einem Radialrad aufweist;
thermisches Koppeln der ersten Wärmepumpenanordnung (101, 111) mit der zweiten Wärmepumpenanordnung (102, 114) mit einem Koppler (103, 115), wobei der Koppler (103, 115) einen ersten Wärmetauscher (115a) aufweist, der eine Primärseite und eine Sekundärseite hat, wobei die Sekundärseite des ersten Wärmetauschers (115a) über den Eingangsabschnitt (114a) mit dem Verdampfer (120, 202, 320) der zweiten Wärmepumpenanordnung gekoppelt ist, und wobei die Primärseite des ersten Wärmetauschers (115a) mit der ersten Wärmepumpenanordnung (111) gekoppelt ist, und wobei der Koppler (103, 115) einen zweiten Wärmetauscher (115b) aufweist, der eine Primärseite und eine Sekundärseite hat, wobei die Sekundärseite des zweiten Wärmetauschers (115b) über den Ausgangsabschnitt (114b) mit dem Verflüssiger (122, 206, 306) der zweiten Wärmepumpenanordnung (102, 114) gekoppelt ist, und wobei die Primärseite des zweiten Wärmetauschers mit der ersten Wärmpumpenanordnung (101, 111) gekoppelt ist; und
Steuern einer Drehzahl des Radialrads abhängig von einer Temperatur (124a-124d) an dem Eingangsabschnitt (114a) oder einer Temperatur an dem Ausgangsabschnitt (114b), so dass eine Aufnahme von elektrischer Leistung durch die zweite Wärmepumpenanordnung (102, 114) bei einer zunehmenden Temperatur (124a, 124b, 124c, 124d) an dem Eingangsabschnitt (114a) oder dem Ausgangsabschnitt (114b) zunimmt und bei einer abnehmenden Temperatur (124a-124d) an dem Eingangsabschnitt (114a) oder dem Ausgangsabschnitt (114b) abnimmt.

## Claims

1. Heat pump system comprising:
a first heat pump arrangement (101, 111) configured to operate with a first heat pump medium comprising CO2;
a second heat pump arrangement (102, 114) configured to operate with a second heat pump medium comprising water, wherein the second heat pump arrangement comprises an input portion (114a), an evaporator (120, 202), a liquefier (122, 306), and an output portion (114b), the input portion (114a) being coupled to the evaporator (120, 202) of the second heat pump arrangement (102, 114), and the output portion (114b) being coupled to the liquefier (122, 306) of the second heat pump arrangement,
wherein the second heat pump arrangement (102, 114) comprises a controller (124) configured to control, as a function of a temperature (124a, 124b) prevailing at the input portion (114a) or of a temperature (124c, 124d) prevailing at the output portion (114b), such that consumption of electric power by the second heat pump arrangement (102, 114) increases as the temperature (124a, 124b, 124c, 124d) prevailing at the input portion (114a) or at the output portion (114b) increases, and decreases as the temperature (124a-124d) prevailing at the input portion (114a) or the output portion (114b) decreases, and wherein the second heat pump arrangement (102, 114) comprises a turbocompressor (121) having a radial impeller, a rotational speed of the radial impeller being controllable as a function of the temperature (124a-124d) prevailing at the input portion (114a) or of the temperature prevailing at the output portion (114b); and
a coupler (103) for thermally coupling the first heat pump arrangement (101, 111) to the second heat pump arrangement (102, 114),
said coupler (103, 115) comprising a first heat exchanger (115a) having a primary side and a secondary side, the secondary side of the first heat exchanger (115a) being coupled to the evaporator (120, 202, 320) of the second heat pump arrangement via the input portion (114a), and the primary side of the first heat exchanger (115a) being coupled to the first heat pump arrangement (111), and
said coupler (103, 115) comprising a second heat exchanger (115b) having a primary side and a secondary side, the secondary side of the second heat exchanger (115b) being coupled to the liquefier (122, 206, 306) of the second heat pump arrangement (102, 114) via the output portion (114b), and the primary side of the second heat exchanger being coupled to the first heat pump arrangement (101, 111).

2. Heat pump system as claimed in claim 1, further comprising a re-cooler (131) configured to be coupled to an environment, the output portion (114b) of the second heat pump arrangement (102, 114) being coupled to the re-cooler (131).

3. Heat pump system as claimed in claim 2, wherein the output portion (114b) comprises a heat exchanger (130) by means of which a re-cooler cycle is fluidically separated from the second heat pump arrangement (102, 114), the re-cooler cycle being configured to operate at a pressure which is higher than a pressure prevailing within the second heat pump arrangement and is lower than a pressure prevailing within the first heat pump arrangement (101, 111).

4. Heat pump system as claimed in claim 2 or 3, wherein the re-cooler (131) comprises a liquid cycle configured to carry a water/glycol mixture or water, or wherein the first heat pump arrangement (101, 111) comprises a compressor (112), the coupler (103, 115) being configured such that the primary side of the first heat exchanger (115a) or of the second heat exchanger (115b) is connected to a compressor output (113, 112) of the first heat pump arrangement (101, 111).

5. Heat pump system as claimed in any of claims 1 to 3, wherein the first heat pump arrangement (101, 111) comprises a compressor (112), wherein the second heat exchanger (115b) is coupled to the compressor (112) of the first heat pump arrangement (101, 111), and the first heat exchanger (115a) is coupled to the second heat exchanger (115b) via a connecting lead (115c).

6. Heat pump system as claimed in claim 5,
wherein the primary side of the first heat exchanger (115a) comprises a first primary input (115c) and a first primary output (132),
wherein the secondary side of the first heat exchanger (115a) comprises a first secondary input (120b) and a first secondary output (120a),
wherein the primary side of the second heat exchanger (115b) comprises a second primary input (113) and a second primary output (115c),
wherein the secondary side of the second heat exchanger (115b) comprises a second secondary output (131a) and a second secondary input (134),
wherein the second primary input (113) is connected to a compressor output of the first heat pump arrangement,
wherein the second primary output is connected to the first primary input of the first heat exchanger (115a) via a connecting lead (115c), and
wherein the first primary output (132) of the first heat exchanger (115a) is thermally coupled to a point of the first heat pump system (100, 111) which differs from the compressor output.

7. Heat pump system as claimed in claim 6, wherein that point of the first heat pump system to which the first primary output (132) of the first heat exchanger (115a) is coupled is an evaporator input of an evaporator (116) of the first heat pump arrangement or a throttle input of a throttle (117) of the first heat pump arrangement (101, 111).

8. Heat pump system as claimed in claim 6 or 7,
wherein the first secondary input (120b) or the first secondary output (120a) is connected to an input portion (230, 401) or to the evaporator (120, 102) of the second heat pump arrangement (114).

9. Heat pump system as claimed in any of claims 6 to 8,
wherein the second secondary input (134) is connected to the liquefier (122) of the second heat pump arrangement via the output portion (114b, 402, 340, 214) of the second heat pump arrangement, or
wherein the second secondary output (131a) is connected to a re-cooler (131).

10. Heat pump system as claimed in any of claims 6 to 9,
which comprises a re-cooler (131), wherein the output portion (114b, 402, 340, 214) of the second heat pump arrangement comprises an output heat exchanger (130, 214) whose primary side is coupled to the re-cooler (131) and whose secondary side is coupled to the liquefier (306) via the output portion (402, 340) of the second heat pump arrangement.

11. Heat pump system as claimed in claim 1,
wherein a connection between consumption of the electrical power and the temperature (100a-124d) prevailing at the input portion (114a) or at the output portion (114b) is approximately linear at least in one operating mode of the second heat pump arrangement (102, 114).

12. Heat pump system as claimed in any of the previous claims, wherein the second heat pump arrangement (102, 114) comprises:
a heat pump stage (200) having a first evaporator (202), a first liquefier (206), and a first compressor (204); and
a further heat pump stage (300) having a second evaporator (302), a second liquefier (306), and a second compressor (304),
wherein a first liquefier exit (224) of the first liquefier (206) is connected to a second evaporator entrance (322) of the second evaporator (302) via a connecting lead (332).

13. Heat pump system as claimed in claim 12, wherein the second heat pump arrangement further comprises a controllable way module to control the heat pump arrangement and the controllable way module (420) to operate the second heat pump arrangement in one of at least two different modes, the second heat pump arrangement being configured to perform at least two modes selected from a group of modes comprising:
a high-performance mode in which the heat pump stage (100) and the further heat pump stage (200) are active;
a medium-performance mode in which the heat pump stage (200) is active and the further heat pump stage (300) is inactive;
a free-cooling mode in which the heat pump stage (200) is active and the further heat pump stage (300) is inactive and the second heat exchanger (214) is coupled to an evaporator inlet (222) of the heat pump stage (200); and
a low-performance mode in which the heat pump stage (200) and the further heat pump stage (300) are inactive,
wherein the controller is configured to detect a condition for a transition from the medium-performance mode to the high-performance mode so as to start the compressor (304) in the further heat pump stage (300), and to switch the controllable way module from the medium-performance mode to the high-performance mode not until a predetermined time period, which is longer than one minute, has expired.

14. Method of producing a heat pump system comprising a first heat pump arrangement (101, 111) configured to operate with a first heat pump medium comprising CO2, and comprising a second heat pump arrangement (102, 114) configured to operate with a second heat pump medium comprising water, wherein the second heat pump arrangement comprises an input portion (114a), an evaporator (120, 202), a liquefier (122, 306), and an output portion (114b), the input portion (114a) being coupled to the evaporator (120, 202) of the second heat pump arrangement (102, 114), and the output portion (114b) being coupled to the liquefier (122, 306) of the second heat pump arrangement, wherein the second heat pump arrangement (102, 114) comprises a controller (124) configured to control, as a function of a temperature (124a, 124b) prevailing at the input portion (114a) or of a temperature (124c, 124d) prevailing at the output portion (114b), such that consumption of electric power by the second heat pump arrangement (102, 114) increases as the temperature (124a, 124b, 124c, 124d) prevailing at the input portion (114a) or at the output portion (114b) increases, and decreases as the temperature (124a-124d) prevailing at the input portion (114a) or the output portion (114b) decreases, and wherein the second heat pump arrangement comprises a turbocompressor (121) having a radial impeller, a rotational speed of the radial impeller being controllable as a function of the temperature (124a-124d) prevailing at the input portion (114a) or of the temperature prevailing at the output portion (114b), the method comprising:
thermally coupling the first heat pump arrangement and the second heat pump arrangement to a coupler (103, 115), said coupler (103, 115) comprising a first heat exchanger (115a) having a primary side and a secondary side, the secondary side of the first heat exchanger (115a) being coupled to the evaporator (120, 202, 320) of the second heat pump arrangement via the input portion (114a), and the primary side of the first heat exchanger (115a) being coupled to the first heat pump arrangement (111), and the coupler (103, 115) comprising a second heat exchanger (115b) having a primary side and a secondary side, the secondary side of the second heat exchanger (115b) being coupled to the liquefier (122, 206, 306) of the second heat pump arrangement (102, 114) via the output portion (114b), and the primary side of the second heat exchanger being coupled to the first heat pump arrangement (101, 111).

15. Method of operating a heat pump system, comprising:
operating a first heat pump arrangement (101, 111) having a first heat pump medium comprising CO2;
operating a second heat pump arrangement (102, 114) having a second heat pump medium comprising water, wherein the second heat pump arrangement comprises an input portion (114a), an evaporator (120, 202), a liquefier (122, 306), and an output portion (114b), the input portion (114a) being coupled to the evaporator (120, 202) of the second heat pump arrangement (102, 114), and the output portion (114b) being coupled to the liquefier (122, 306) of the second heat pump arrangement, wherein the second heat pump arrangement comprises a turbocompressor (121) having a radial impeller;
thermally coupling the first heat pump arrangement (101, 111) to the second heat pump arrangement (102, 114) with a coupler (103, 115), said coupler (103, 115) comprising a first heat exchanger (115a) having a primary side and a secondary side, the secondary side of the first heat exchanger (115a) being coupled to the evaporator (120, 202, 320) of the second heat pump arrangement via the input portion (114a), and the primary side of the first heat exchanger (115a) being coupled to the first heat pump arrangement (111), and the coupler (103, 115) comprising a second heat exchanger (115b) having a primary side and a secondary side, the secondary side of the second heat exchanger (115b) being coupled to the liquefier (122, 206, 306) of the second heat pump arrangement (102, 114) via the output portion (114b), and the primary side of the second heat exchanger being coupled to the first heat pump arrangement (101, 111); and
controlling a rotational speed of the radial impeller as a function of a temperature (124a-124d) prevailing at the input portion (114a) or of a temperature prevailing at the output portion (114b), so that consumption of electric power by the second heat pump arrangement (102, 114) increases as the temperature (124a, 124b, 124c, 124d) prevailing at the input portion (114a) or at the output portion (114b) increases, and decreases as the temperature (124a-124d) prevailing at the input portion (114a) or the output portion (114b) decreases.

## Revendications

1. Système de pompe à chaleur, aux caractéristiques suivantes:
un premier aménagement de pompe à chaleur (101, 111) qui est conçu pour fonctionner avec un premier fluide de pompe à chaleur qui présente du CO2;
un deuxième aménagement de pompe à chaleur (102, 114) qui est conçu pour fonctionner avec un deuxième fluide de pompe à chaleur qui présente de l'eau, où le deuxième aménagement de pompe à chaleur présente un segment d'entrée (114a), un évaporateur (120, 202), un condenseur (122, 306) et un segment de sortie (114b), où le segment d'entrée (114a) est couplé à l'évaporateur (120, 202) du deuxième aménagement de pompe à chaleur (102, 114), et où le segment de sortie (114b) est couplé au condenseur (122, 306) du deuxième aménagement de pompe à chaleur,
dans lequel le deuxième aménagement de pompe à chaleur (102, 114) présente une commande (124) qui est conçue pour commander, en fonction d'une température (124a, 124b) au niveau du segment d'entrée (114a) ou d'une température (124c, 124d) au niveau du segment de sortie (114b), de sorte qu'une consommation de puissance électrique par le deuxième aménagement de pompe à chaleur (102, 114) augmente à une température croissante (124a, 124b, 124c, 124d) au niveau du segment d'entrée (114a) ou du segment de sortie (114b) et diminue à une température décroissante (124a à 124d) au niveau du segment d'entrée (114a) ou du segment de sortie (114b), et dans lequel le deuxième aménagement de pompe à chaleur (102, 114) présente un turbocompresseur (121) avec une roue radiale, dans lequel un nombre de tours de la roue radiale peut être commandé en fonction de la température (124a à 124d) au niveau du segment d'entrée (114a) ou de la température au niveau du segment de sortie (114b); et
un coupleur (103) destiné à coupler thermiquement le premier aménagement de pompe à chaleur (101, 111) au deuxième aménagement de pompe à chaleur (102, 114),
dans lequel le coupleur (103, 115) présente un premier échangeur de chaleur (115a) qui a un côté primaire et un côté secondaire, dans lequel le côté secondaire du premier échangeur de chaleur (115a) est couplé par l'intermédiaire du segment d'entrée (114a) à l'évaporateur (120, 202, 320) du deuxième aménagement de pompe à chaleur, et dans lequel le côté primaire du premier échangeur de chaleur (115a) est couplé au premier aménagement de pompe à chaleur (111), et
dans lequel le coupleur (103, 115) présente un deuxième échangeur de chaleur (115b) qui a un côté primaire et un côté secondaire, dans lequel le côté secondaire du deuxième échangeur de chaleur (115b) est couplé par l'intermédiaire du segment de sortie (114b) au condenseur (122, 206, 306) du deuxième aménagement de pompe à chaleur (102, 114), et dans lequel le côté primaire du deuxième échangeur de chaleur est couplé au premier aménagement de pompe à chaleur (101, 111).

2. Système de pompe à chaleur selon la revendication 1, qui présente par ailleurs un refroidisseur (131) qui est conçu pour être couplé à un environnement, dans lequel le segment de sortie (114b) du deuxième aménagement de pompe à chaleur (102, 114) est couplé au refroidisseur (131).

3. Système de pompe à chaleur selon la revendication 2, dans lequel le segment de sortie (114b) présente un échangeur de chaleur (130) par lequel un circuit de refroidisseur est séparé en fluide du deuxième aménagement de pompe à chaleur (102, 114), dans lequel le circuit de refroidisseur est conçu pour fonctionner à une pression qui est supérieure à une pression dans le deuxième aménagement de pompe à chaleur, et qui est inférieure à une pression dans le premier aménagement de pompe à chaleur (101, 111).

4. Système de pompe à chaleur selon la revendication 2 ou 3, dans lequel le refroidisseur (131) présente un circuit de liquide qui est conçu pour conduire un mélange eau/glycol ou de l'eau, ou
dans lequel le premier aménagement de pompe à chaleur (101, 111) présente un compresseur (112), dans lequel le coupleur (103, 115) étant conçu de sorte que le côté primaire du premier échangeur de chaleur (115a) ou du deuxième échangeur de chaleur (115b) est connecté à une sortie de compresseur (113, 112) du premier aménagement de pompe à chaleur (101, 111).

5. Système de pompe à chaleur selon l'une des revendications 1 à 3, dans lequel le premier aménagement de pompe à chaleur (101, 111) présente un compresseur (112), dans lequel le deuxième échangeur de chaleur (115b) est couplé au compresseur (112) du premier aménagement de pompe à chaleur (101, 111) et dans lequel le premier échangeur de chaleur (115a) est couplé au deuxième échangeur de chaleur (115b) par l'intermédiaire d'une conduite de raccordement (115c).

6. Système de pompe à chaleur selon la revendication 5,
dans lequel le côté primaire du premier échangeur de chaleur (115a) présente une première entrée primaire (115c) et une première sortie primaire (132),
dans lequel le côté secondaire du premier échangeur de chaleur (115a) présente une première entrée secondaire (120b) et une première sortie secondaire (120a),
dans lequel le côté primaire du deuxième échangeur de chaleur (115b) présente une deuxième entrée primaire (113) et une deuxième sortie primaire (115c),
dans lequel le côté secondaire du deuxième échangeur de chaleur (115b) présente une deuxième sortie secondaire (131a) et une deuxième entrée secondaire (134),
dans lequel la deuxième entrée primaire (113) est connectée à une sortie de compresseur du premier aménagement de pompe à chaleur,
dans lequel la deuxième sortie primaire est connectée par l'intermédiaire d'une conduite de raccordement (115c) à la première entrée primaire du premier échangeur de chaleur (115a), et
dans lequel la première sortie primaire (132) du premier échangeur de chaleur (115a) est couplée thermiquement à un endroit du premier système de pompe à chaleur (100, 111) qui est différent de la sortie de compresseur.

7. Système de pompe à chaleur selon la revendication 6, dans lequel l'endroit du premier système de pompe à chaleur auquel est couplée la première sortie primaire (132) du premier échangeur de chaleur (115a) est une entrée d'un évaporateur (116) du premier aménagement de pompe à chaleur ou une entrée d'un étrangleur (117) du premier aménagement de pompe à chaleur (101, 111).

8. Système de pompe à chaleur selon la revendication 6 ou 7,
dans lequel la première entrée secondaire (120b) ou la première sortie secondaire (120a) est connectée à un segment d'entrée (230, 401) ou à l'évaporateur (120, 102) du deuxième aménagement de pompe à chaleur (114).

9. Système de pompe à chaleur selon l'une des revendications 6 à 8,
dans lequel la deuxième entrée secondaire (134) est connectée par l'intermédiaire du segment de sortie (114b, 402, 340, 214) du deuxième aménagement de pompe à chaleur au condenseur (122) du deuxième aménagement de pompe à chaleur, ou
dans lequel la deuxième sortie secondaire (131a) est connectée à un refroidisseur (131).

10. Système de pompe à chaleur selon l'une des revendications 6 à 9, qui présente un refroidisseur (131), dans lequel le segment de sortie (114b, 402, 340, 214) du deuxième aménagement de pompe à chaleur présente un échangeur de chaleur de sortie (130, 214) dont le côté primaire est couplé au refroidisseur (131) et dont le côté secondaire est couplé au condenseur (306) par l'intermédiaire du segment de sortie (402, 340) du deuxième aménagement de pompe à chaleur.

11. Système de pompe à chaleur selon la revendication 1,
dans lequel un rapport entre une consommation de la puissance électrique et la température (100a à 124d) est, au niveau du segment d'entrée (114a) ou du segment de sortie (114b), approximativement linéaire, au moins dans un mode de fonctionnement du deuxième aménagement de pompe à chaleur (102, 114).

12. Système de pompe à chaleur selon l'une des revendications précédentes, dans lequel le deuxième aménagement de pompe à chaleur (102, 114) présente les caractéristiques suivantes:
un étage de pompe à chaleur (200) avec un premier évaporateur (202), un premier condenseur (206) et un premier compresseur (204); et
un autre étage de pompe à chaleur (300) avec un deuxième évaporateur (302), un deuxième condenseur (306) et un deuxième compresseur (304),
dans lequel une première sortie de condenseur (224) du premier condenseur (206) est connectée à une deuxième entrée d'évaporateur (322) du deuxième évaporateur (302) par l'intermédiaire d'une conduite de raccordement (332).

13. Système de pompe à chaleur selon la revendication 12, dans lequel le deuxième aménagement de pompe à chaleur présente par ailleurs un module de trajet pouvant être commandé, destiné à commander l'aménagement de pompe à chaleur et le module de trajet pouvant être commandé (420) pour faire fonctionner le deuxième aménagement de pompe à chaleur dans l'un parmi au moins deux modes différents, dans lequel le deuxième aménagement de pompe à chaleur est conçu pour réaliser au moins deux modes sélectionnés dans un groupe de modes qui présente les modes suivants:
un mode de haute puissance dans lequel l'étage de pompe à chaleur (100) et l'autre étage de pompe à chaleur (200) sont actifs;
un mode de moyenne puissance dans lequel l'étage de pompe à chaleur (200) est actif et l'autre étage de pompe à chaleur (300) est inactif;
un mode de refroidissement libre dans lequel l'étage de pompe à chaleur (200) est actif et l'autre étage de pompe à chaleur (300) est inactif et le deuxième échangeur de chaleur (214) est couplé à une entrée d'évaporateur (222) de l'étage de pompe à chaleur (200); et
un mode de faible puissance dans lequel l'étage de pompe à chaleur (200) et l'autre étage de pompe à chaleur (300) sont inactifs,
dans lequel la commande est conçue pour détecter une condition pour une transition du mode de moyenne puissance au mode de haute puissance pour démarrer le compresseur (304) dans l'autre étage de pompe à chaleur (300), et pour ne commuter le module de trajet pouvant être commandé du mode de moyenne puissance au mode de haute puissance qu'après écoulement d'un temps prédéterminé qui est supérieur à une minute.

14. Procédé de fabrication d'un système de pompe à chaleur avec un premier aménagement de pompe à chaleur (101, 111) qui est conçu pour fonctionner avec un premier fluide de pompe à chaleur qui présente du CO2, et un deuxième aménagement de pompe à chaleur (102, 114) qui est conçu pour fonctionner avec un deuxième fluide de pompe à chaleur qui présente de l'eau, où le deuxième aménagement de pompe à chaleur présente un segment d'entrée (114a), un évaporateur (120, 202), un condenseur (122, 306) et un segment de sortie (114b), où le segment d'entrée (114a) est couplé à l'évaporateur (120, 202) du deuxième aménagement de pompe à chaleur (102, 114), et où le segment de sortie (114b) est couplé au condenseur (122, 306) du deuxième aménagement de pompe à chaleur, où le deuxième aménagement de pompe à chaleur (102, 114) présente une commande (124) qui est conçue pour commander, en fonction d'une température (124a, 124b) au niveau du segment d'entrée (114a) ou d'une température (124c, 124d) au niveau du segment de sortie (114b), de sorte qu'une consommation de puissance électrique par le deuxième aménagement de pompe à chaleur (102, 114) augmente à une température croissante (124a, 124b, 124c, 124d) au niveau du segment d'entrée (114a) ou du segment de sortie (114b) et diminue à une température décroissante (124a à 124d) au niveau du segment d'entrée (114a) ou du segment de sortie (114b), et où le deuxième aménagement de pompe à chaleur présente un turbocompresseur (121) avec une roue radiale, où un nombre de tours de la roue radiale peut être commandé en fonction de la température (124a à 124d) au niveau du segment d'entrée (114a) ou de la température au niveau du segment de sortie (114b), à l'étape suivante consistant à:
coupler thermiquement le premier aménagement de pompe à chaleur et le deuxième aménagement de pompe à chaleur à un coupleur (103, 115), où le coupleur (103, 115) présente un premier échangeur de chaleur (115a) qui a un côté primaire et un côté secondaire, où le côté secondaire du premier échangeur de chaleur (115a) est couplé par l'intermédiaire du segment d'entrée (114a) à l'évaporateur (120, 202, 320) du deuxième aménagement de pompe à chaleur, et où le côté primaire du premier échangeur de chaleur (115a) est couplé au premier aménagement de pompe à chaleur (111), et où le coupleur (103, 115) présente un deuxième échangeur de chaleur (115b) qui a un côté primaire et un côté secondaire, où le côté secondaire du deuxième échangeur de chaleur (115b) est couplé par l'intermédiaire du segment de sortie (114b) au condenseur (122, 206, 306) du deuxième aménagement de pompe à chaleur (102, 114), et où le côté primaire du deuxième échangeur de chaleur est couplé au premier aménagement de pompe à chaleur (101, 111).

15. Procédé permettant de faire fonctionner un système de pompe à chaleur, aux étapes suivantes consistant à:
faire fonctionner un premier aménagement de pompe à chaleur (101, 111) avec un premier fluide de pompe à chaleur qui présente du CO2;
faire fonctionner un deuxième aménagement de pompe à chaleur (102, 114) avec un deuxième fluide de pompe à chaleur qui présente de l'eau, où le deuxième aménagement de pompe à chaleur présente un segment d'entrée (114a), un évaporateur (120, 202), un condenseur (122, 306) et un segment de sortie (114b), où le segment d'entrée (114a) est couplé à l'évaporateur (120, 202) du deuxième aménagement de pompe à chaleur (102, 114), et où le segment de sortie (114b) est couplé au condenseur (122, 306) du deuxième aménagement de pompe à chaleur, où le deuxième aménagement de pompe à chaleur présente un turbocompresseur (121) avec une roue radiale;
coupler thermiquement le premier aménagement de pompe à chaleur (101, 111) au deuxième aménagement de pompe à chaleur (102, 114) par un coupleur (103, 115), où le coupleur (103, 115) présente un premier échangeur de chaleur (115a) qui a un côté primaire et un côté secondaire, où le côté secondaire du premier échangeur de chaleur (115a) est couplé par l'intermédiaire du segment d'entrée (114a) à l'évaporateur (120, 202, 320) du deuxième aménagement de pompe à chaleur, et où le côté primaire du premier échangeur de chaleur (115a) est couplé au premier aménagement de pompe à chaleur (111), et où le coupleur (103, 115) présente un deuxième échangeur de chaleur (115b) qui a un côté primaire et un côté secondaire, où le côté secondaire du deuxième échangeur de chaleur (115b) est couplé par l'intermédiaire du segment de sortie (114b) au condenseur (122, 206, 306) du deuxième aménagement de pompe à chaleur (102, 114), et où le côté primaire du deuxième échangeur de chaleur est couplé au premier aménagement de pompe à chaleur (101, 111); et
commander un nombre de tours de la roue radiale en fonction d'une température (124a à 124d) au niveau du segment d'entrée (114a) ou d'une température au niveau du segment de sortie (114b) de sorte qu'une consommation de puissance électrique par le deuxième aménagement de pompe à chaleur (102, 114) augmente à une température croissante (124a, 124b, 124c, 124d) au niveau du segment d'entrée (114a) ou du segment de sortie (114b) et diminue à une température décroissante (124a à 124d) au niveau du segment d'entrée (114a) ou du segment de sortie (114b).
